# EUROPEAN PATENT APPLICATION

(11) **EP 4 827 063 A1**
(43) Date of publication of application: **21.10.2026**
(21) Application number: 24914916.2
(22) Date of filing: 29.09.2024
(51) Int. Cl.: H04L 41/0896

(54) **SERVICE PROCESSING METHOD, NETWORK DEVICE, AND STORAGE MEDIUM**

(30) Priority: 03.01.2024 CN 202410009200
(71) Applicant: ZTE CORPORATION, Shenzhen, Guangdong 518057 (CN)
(72) Inventor: LIU, Feng, Shenzhen, Guangdong 518057 (CN)
(74) Representative: Savi, Massimiliano
(86) International application number: PCT/CN2024/122151
(87) International publication number: WO 2025/145695

(57) **Abstract**

The present application provides a service processing method, a network device, and a storage medium. The method comprises: performing 64B/66B encoding on a service stream to obtain a 66-bit code block stream; transcoding the 66-bit code block stream to obtain a transcoded first code block stream, wherein the number of bits of a transcoded first code block is greater than 66; and then, mapping the transcoded first code block stream to a first transmission container, and sending the first transmission container, wherein the first transmission container comprises an overhead code block and a slot code block, the number of bits of the overhead code block and the number of bits of the slot code block are both consistent with the number of bits of the transcoded first code block, the overhead code block carries overhead information, and the slot code block carries the transcoded first code block.

## Description

### CROSS-REFERENCE TO RELATED APPLICATION

This application is filed on the basis of the Chinese patent application No. 202410009200.7 filed January 3, 2024 to the CNIPA, entitled "SERVICE PROCESSING METHOD, NETWORK DEVICE, AND STORAGE MEDIUM", and claims priority of the Chinese patent application. The entire contents of the above application are incorporated herein by reference.

### TECHNICAL FIELD

The present application relates to the field of communication technologies, and in particular to a method for service processing, a network device, and a storage medium.

### BACKGROUND

The current Flexible Ethernet (FlexE) standard stipulates that an individual 66-bit block is transmitted in each timeslot. Specifically, a transfer rate of 5 Gbit/s is represented by each of the 66-bit blocks. Currently, in the data processing at a high-rate Ethernet interface such as an 800 Gbit/s interface, processing is conducted in a manner where a 257-bit block is transmitted in each of the timeslots. With the condition of an 800 Gbit/s rate satisfied, if data processing is still conducted by the FlexE protocol in the manner where a 66-bit block is transmitted in each of the timeslots, that is, data processing is conducted in a manner where the transmission rate of each of the timeslots is 5 Gbit/s, a considerably large number of timeslots to be processed will be caused. Accordingly, the efficiency of data processing will be reduced.

### SUMMARY

Provided are a method for service processing, a network device, and a storage medium according to the embodiments of the present application.

According to an aspect of the present application, a method for service processing is provided. The method includes: encoding a service stream by means of 64B/66B encoding to obtain a stream of 66-bit blocks; transcoding the stream of 66-bit blocks to obtain a transcoded stream of first blocks, where each of the first blocks in the stream of first blocks contains more than 66 bits; mapping the stream of first blocks to a first transmission container, and transmitting the first transmission container, where the first transmission container contains overhead blocks and timeslot blocks, a number of bits of each of the overhead blocks and the timeslot blocks is identical to a number of bits of each of the first blocks, the overhead blocks carry overhead information, and the first blocks are carried over the timeslot blocks.

According to another aspect of the present application, a method for service processing. The method includes: extracting a stream of first blocks from received first target information, where the stream of first blocks is obtained by transcoding a stream of 66-bit blocks, the stream of 66-bit blocks is obtained by encoding a service stream by means of 64B/66B encoding; and a number of bits of each of the first blocks in the stream of first blocks is greater than 66; and mapping the stream of first blocks to a second transmission container, and transmitting the second transmission container, where the second transmission container contains overhead blocks and timeslot blocks, a number of bits of each of the overhead blocks and the timeslot blocks is identical to a number of bits of each of the first blocks, the overhead blocks carry overhead information, and the first blocks are carried over the timeslot blocks.

According to yet another aspect of the present application, a method for service processing is provided. The method includes: extracting a third transmission container from received third target information, and a stream of first blocks is extracted from the third transmission container; where the third transmission container includes overhead blocks and timeslot blocks, a number of bits of each of the overhead blocks and the timeslot blocks is identical to the number of bits of each of the first blocks in the stream of first blocks; overhead information is carried by the overhead blocks, the first blocks are carried by the timeslot blocks, the stream of first blocks is obtained by transcoding a stream of 66-bit blocks, the stream of 66-bit blocks is obtained by encoding a service stream by means of 64B/66B encoding, and the number of bits of each of the first blocks is greater than 66; performing inverse-transcoding on the stream of first blocks to obtain the stream of 66-bit blocks; and decoding the stream of 66-bit blocks by means of 64B/66B decoding to obtain the service stream.

According to yet another aspect of the present application, a netrwork device is provided. The device includes a memory, a processor, and a computer program stored in the memory and executable on the processor which, when executed by the processor, causes the processor to carry out any one of the methods as described above.

According to yet another aspect of the present application, a computer-readable storage medium is provided. The computer-readable storage medium stores a computer-executable instruction which, when executed by a processor causes the processor to carry out any one of the methods as described above.

According to yet another aspect of the present application, a computer program product is provided. The product includes a computer program or a computer instruction stored in a computer-readable storage medium which, when executed by a processor of a computer device, causes the computer device to carry out any one of the methods as described above.

### BRIEF DESCRIPTION OF DRAWINGS

FIG. 1 depicts a schematic diagram illustrating the architecture of an optical module where a FlexE protocol is applied in related art;
FIG. 2 depicts a schematic diagram of a 66-bit block in related art;
FIG. depicts is a schematic diagram illustrating the position of a FlexE overhead block in a block group in related art;
FIG. 4 depicts a schematic diagram illustrating the allocation of 66-bit blocks to various transmission instances in related art;
FIG. 5 depicts a schematic diagram of a FlexE overhead frame in related art;
FIG. 6 depicts a schematic diagram illustrating a process where a FlexE frame is utilized to carry service information in related art;
FIG. 7 depicts a schematic diagram illustrating a process where a FlexE frame is restored to service information in related art;
FIG. 8 depicts a flowchart of data processing stipulated by an 800 Gbit/s Ethernet interface standard in related art;
FIG. 9 depicts a schematic diagram of a 257-bit block in related art;
FIG. 10 depicts a schematic diagram illustrating encoding into a 257-bit block when all four 66-bit blocks are data blocks in related art;
FIG. 11 depicts a schematic diagram illustrating encoding into a 257-bit block when four 66-bit blocks include three data blocks and one control block in related art;
FIG. 12 depicts a schematic diagram illustrating encoding into a 257-bit block when four 66-bit blocks include one control block and three data blocks in related art;
FIG. 13 depicts a schematic diagram illustrating encoding into a 257-bit block when all four 66-bit blocks are control blocks in related art;
FIG. 14 depicts a schematic diagram illustrating the processing of a 257-bit block by an intermediate device in related art;
FIG. 15 depicts a flowchart of a method for service processing according to an embodiment of the present application;
FIG. 16 depicts a schematic diagram illustrating the construction of a new FlexE frame based on a length of 257 bits according to an embodiment of the present application;
FIG. 17 depicts a schematic diagram of 66B/257B encoding according to an embodiment of the present application;
FIG. 18 depicts a schematic diagram of a novel FlexE frame according to an embodiment of the present application;
FIG. 19 depicts a schematic diagram of a novel FlexE overhead frame according to an embodiment of the present application;
FIG. 20 depicts a schematic diagram illustrating the position of a 66-bit overhead block in a 257-bit block according to an embodiment of the present application;
FIG. 21 depicts a schematic diagram illustrating the position of a 66-bit overhead block in a 257-bit block according to another embodiment of the present application;
FIG. 22 depicts a schematic diagram illustrating the position of a 66-bit overhead block in a 257-bit block according to another embodiment of the present application;
FIG. 23 depicts a schematic diagram illustrating the position of a 66-bit overhead block in a 257-bit block according to another embodiment of the present application;
FIG. 24 depicts a schematic diagram illustrating the position of a 66-bit overhead block in a 257-bit block according to another embodiment of the present application;
FIG. 25 depicts a schematic diagram illustrating the position of a 66-bit overhead block in a 257-bit block according to another embodiment of the present application;
FIG. 26 depicts a schematic diagram of a FlexE shim layer according to an embodiment of the present application;
FIG. 27 depicts a schematic flowchart of a method for service processing performed by a transmitting-end device according to an embodiment of the present application;
FIG. 28 depicts a flowchart of a method for service processing according to another embodiment of the present application;
FIG. 29 depicts a schematic diagram illustrating the processing of a 257-bit block by an intermediate device according to an embodiment of the present application;
FIG. 30 depicts a schematic diagram of a 66-bit idle block according to an embodiment of the present application;
FIG. 31 depicts a schematic diagram illustrating the encoding of four 66-bit-long idle blocks into a 257-bit-long idle block according to an embodiment of the present application;
FIG. 32 depicts a schematic diagram illustrating the insertion of a 257-bit idle block between two 257-bit blocks according to an embodiment of the present application;
FIG. 33 depicts a schematic diagram illustrating the position adjustment of a 66-bit idle block among a plurality of 257-bit blocks according to an embodiment of the present application;
FIG. 34 depicts a flowchart of a method for service processing according to another embodiment of the present application; and
FIG. 35 depicts a schematic flowchart of a method for service processing performed by a receiving-end device according to an embodiment of the present application.

### DETAILED DESCRIPTION

The purpose, technical scheme and advantages of the present invention will become apparent through the following description for various embodiments in conjunction with the drawings. It should be understood that the embodiments described here are intended for illustration but not limitation of the present disclosure.

It shall be noted that, in some cases, the operations shown or described may be performed in a different order than the logical order shown in the flowcharts. It should be understood that in the description, the claims and the description of the drawings, the term a plurality (or plurality) means more than two; greater than, less than, more than, etc. shall be understood to exclude the number being referred to; and above, below, within, etc. shall be understood to include the number being referred to. Term "first" and "second" if described, are intended for distinguishing technical features, which shall not be understood as indicating or implying relative importance or implicitly indicating the number of the indicated technical features or the order of the indicated technical features.

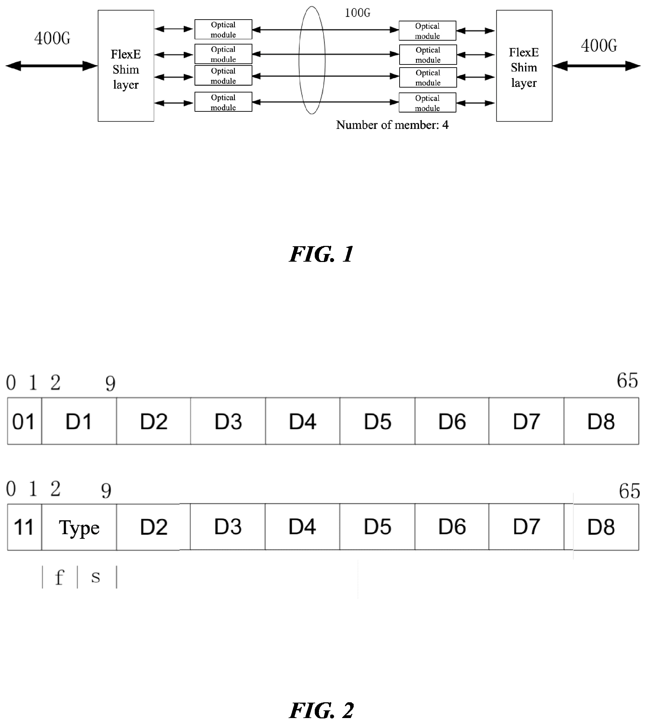

Notably, network service traffic has been increasing rapidly in current communication networks, whereby a rapid increase in the service bandwidth of communication devices is driven. Accordingly, to accommodate the growing demands of network service traffic, the interface bandwidth of communication devices has been increased from 10 Mbit/s to 100 Mbit/s, 1 Gbit/s, 10 Gbit/s, and so forth. Currently, a transmission rate of 100 Gbit/s has already been achieved by commercial optical modules for communication devices. However, once the transmission speed of the optical modules exceeds 100 Gbit/s, escalating technical challenges are encountered, whereby the production cost of the optical modules increases significantly. During the technological evolution from 100 Gbit/s to 400 Gbit/s, although 400 Gbit/s optical modules have been developed, such modules remain cost prohibitive. Specifically, the cost of a single 400 Gbit/s optical module exceeds the aggregate cost of four 100 Gbit/s optical modules. Accordingly, a lack of commercial viability is caused for the 400 Gbit/s optical modules. To accommodate the transfer demands of 400 Gbit/s services without increasing manufacturing costs, a FlexE protocol was defined by international standards organizations, whereby 400 Gbit/s service traffic can be transferred over 100 Gbit/s optical modules. A plurality of 100 Gbit/s optical modules are combined in accordance with the FlexE protocol to form a logical transfer channel with a larger carrying bandwidth. As shown in FIG. 1, four 100 Gbit/s optical modules are combined by means of the FlexE protocol to form a 400 Gbit/s transfer channel. This is equivalent to the service transfer speed of a single 400 Gbit/s optical module. Thus, not only is the 400 Gbit/s service transfer requirement satisfied, but the cost issue of service transfer is also resolved.

Currently, the physical layer transmission rate defined in the FlexE protocol is 100 Gbit/s. In the Ethernet protocol, it is defined that before sending a 100 Gbit/s data packet, 64B/66B encoding is first performed on the data packet. A 64-bit data block in the data packet is expanded into a 66-bit information block. Specifically, the added 2 bits are located at the front of the 66-bit information block, acting as a start flag for the 66-bit information block. Subsequently, the 66-bit information block is sent out from the optical module interface. In the 64B/66B encoding rules defined by the 802.3 protocol, each of the blocks is composed of 66 bits. As shown in FIG. 2, the first 2 bits are the synchronization header of the block. The synchronization header bits '01' indicates a D block (i.e., a data block), and the subsequent 8 bytes (64-bit) are data content. The synchronization header bits '10' indicates a control block. The content of the immediately following first byte is a block type field, indicating the type of the control block. The subsequent 7 bytes are the content of the control block. The content of these 7 bytes is associated with the type of the control block. For a control block, the length of the 'block type' field is 8 bits, and the content is specific encoded content. Different types of control blocks are indicated by different contents of the 'block type' field. Specifically, the 'block type' field can be divided into an 'f' field and an 's' field. Each of the 'f' field and the 's' field contains 4 bits. A one-to-one correspondence exists between the content of the 'f' field and the content of the 's' field. The content of the 'f' field and the content of the 's' field are identical values or bitwise opposite values. In an example where the content of the control field of an idle block is '0x1E' (generally, '0x' indicates the subsequent data content is in hexadecimal format; the same applies below). The content of the 'f' field is '0x1', and the content of the 's' field is '0xE'. A bitwise inversion relationship exists between the content of the 'f' field and the content of the 's' field. For a T1 block, the content of its control field is '0x99'. Specifically, the content of the 'f' field is '0x9', and the content of the 's' field is also '0x9'. The content of the 'f' field and the content of the 's' field are bitwise identical. Therefore, a one-to-one correspondence relationship exists between the 'f' field and the 's' field. Once the content of one of the fields is determined, the content of the other field can be determined by means of the encoding rules shown in FIG. 2. In particular, S blocks (start blocks), T blocks (terminate blocks), O blocks, idle blocks, are control blocks. The content of the 'block type' field in a block being '0x78', indicates the control block is an S block. In addition to being indicative of a terminate block, a T block can also carry service content positioned at the trailing 7 bytes within the block. T blocks defined in the Ethernet standard can be categorized into 8 types: T0 blocks, T1 blocks, T2 blocks, T3 blocks, T4 blocks, T5 blocks, T6 blocks, and T7 blocks. In this regard, no service information is carried over a T0 block where the content of the 'block type' field in the first byte is '0x87'. Service information with one byte is carried over a T1 block where the content of the first byte is '0x99'. Service information with two bytes is carried over a T2 block where the content of the first byte is '0xAA', and so forth. Notably, in 66-bit, 257-bit, and similar encodings, all field contents are stored and transmitted within a block in a reverse order. However, for readability, the semantic meaning of each field within the block is directly provided in international standard specifications and various technical documents, whereby the specific content of the field is directly presented. Although such a presentation differs from the arrangement sequence of the transmission order of the specific content within the block, the conveyed meaning remains identical.

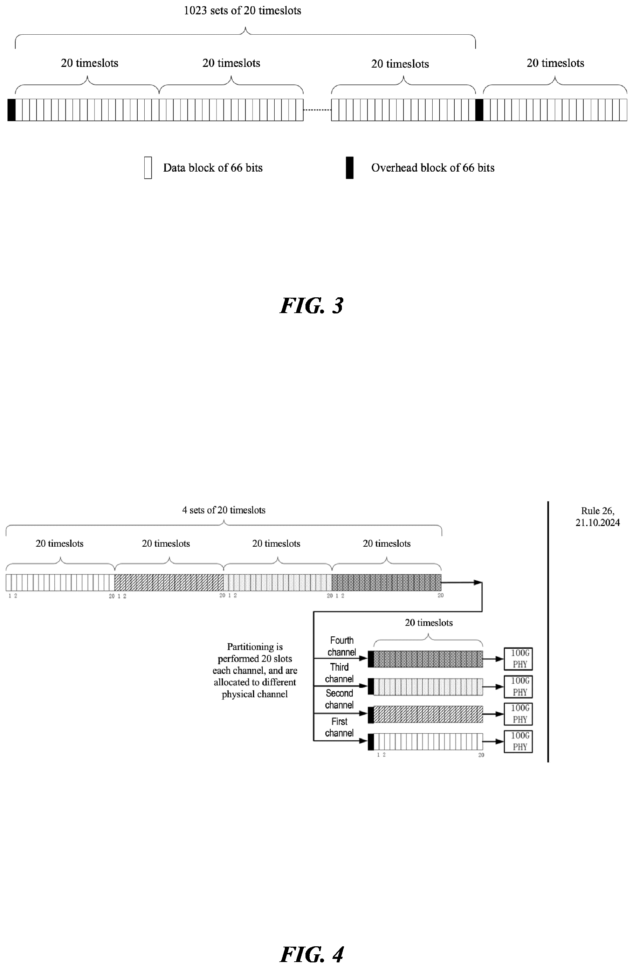

In each 100 Gbit/s physical member (i.e., an optical module) defined by the current FlexE protocol, every 20 66-bit information blocks can be grouped into a block group. Specifically, a total of 20 information blocks are encompassed within each block group to represent 20 timeslots, where each of the information blocks corresponds to a respective timeslot. In this regard, a service bandwidth rate of 5 Gbit/s is represented by each of the timeslots. During the transmission of the 66-bit information blocks, each time the transmission of 1023 block groups (1023*20 information blocks) is completed, a FlexE overhead block can be inserted, such as the black block shown in FIG. 3. Following insertion of the overhead block, transmission of the block groups is resumed. Once transmission of a subsequent 1023 block groups (encompassing 1023*20 information blocks) is completed, a further overhead block is inserted, and such a transmission sequence is repeated iteratively. In this way, during the transmission of the information blocks, overhead blocks are inserted periodically. There are 1023*20 information blocks between two immediately adjacent overhead blocks. For a physical line with a transmission rate of 100 Gbit/s, a physical port is divided into 20 timeslots by the FlexE protocol. Therefore, the bandwidth corresponding to each of the timeslots is 5 Gbit/s.

With the condition of a 400 Gbit/s logical service bandwidth formed by four 100 Gbit/s physical layers satisfied, as illustrated in FIG. 4, a block group is still constituted by information blocks of 20 timeslots for each physical layer. Specifically, an overhead block is inserted every 1023 block groups. In a FlexE master calendar situated within a shim layer, information blocks corresponding to 20 timeslots from 4 respective paths are multiplexed into an aggregate block group, where a total of 80 timeslots are encompassed within the aggregate block group. Service information is transferred over these 80 timeslots, where the bandwidth of each respective timeslot is 5 Gbit/s, whereby an aggregate service transfer bandwidth of 400 Gbit/s is achieved in the shim layer.

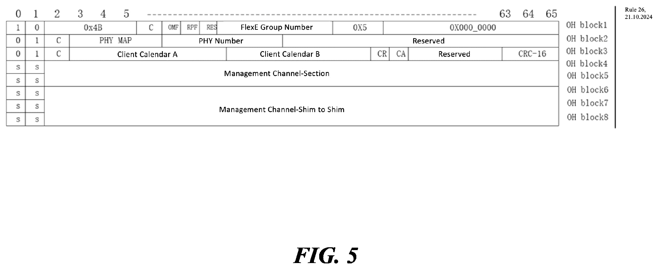

Specifically, a FlexE overhead block has a length of 66 bits, and an overhead block is inserted at an interval of every 1023*20 information blocks during transmission of a service stream. A positioning function is fulfilled by the overhead blocks throughout the entire service stream. Once the position of an overhead block is determined, the position of the first information block group in the service stream and the positions of subsequent information block groups can be determined. An overhead block is as shown in FIG. 5. A FlexE overhead frame can be formed by 8 consecutive overhead blocks. An overhead block is composed of a 2-bit block synchronization header and 64-bit block content. The block synchronization header is located in the first 2 columns, and the subsequent 64 columns are the block content. The block flag of the first overhead block is '10', and the block flags of the subsequent 7 overhead blocks are '01' or 'SS' ('SS' indicates undetermined content). In the current FlexE protocol, it is defined that an overhead frame is formed by 8 overhead blocks. That is, 8 overhead blocks are present in an overhead frame. Specifically, the first overhead block is identified by two fields contained therein: '0x4B' (hexadecimal, identified as '0x4B') and '0x05' (hexadecimal, identified as '0x5'). When it is detected that the content of the corresponding positions in an overhead block is '0x4B' and '0x05', it is indicated that the overhead block is the first overhead block. An overhead frame is formed by the first overhead block and the subsequent 7 overhead blocks. Specifically, the content of the first overhead block includes: '0x4B' (8 bits, hexadecimal '0x4B'), a C bit (1 bit, indicating adjustment and control), an OMF bit (1 bit, indicating an overhead frame multiframe indicator), an RPF bit (1 bit, indicating a remote defect indicator), an RES bit (1 bit, a reserved bit), a FlexE group number (20 bits, indicating the number of a bundle group), '0x5' (4 bits, hexadecimal '5'), and '000000' (28 bits, all zeros). Here, '0x4B' and '0x5' act as the flag indicators of the first overhead block. During the reception of a service stream, when it is found that the content at the corresponding positions in an overhead block is '0x4B' and '0x5', it is indicated that the overhead block is the first overhead block in the overhead frame. An overhead frame is formed by the overhead block and the subsequent 7 consecutive overhead blocks. In the overhead frame, the 'reserved' part is reserved content, which has not yet been defined in the current FlexE protocol. The 'PHY number' indicates the number of the present physical layer member in a group, and the number ranges between 0 and 255. The 'PHY map' indicates the presence status of each physical layer member in the group. The 'PHY map' in an overhead frame has 8 bits, and a total of 256 bits are present in 32 multiframes, indicating whether 256 physical layer members are present in the group, and if present, the corresponding position is set to "1"; otherwise, it is set to '0'. 20 timeslots are present in a FlexE frame with a rate of 100 Gbit/s. Service information can be carried over each of the timeslots. The name of the service carried by each of the timeslots is indicated by a Client calendar. The name of the service carried by the timeslot is represented by Client calendar A and Client calendar B. During normal operation, only one group among Client calendar A and Client calendar B is utilized to indicate an active state (the C bit indicates which group is in the active state), while the other group will be in a standby state.

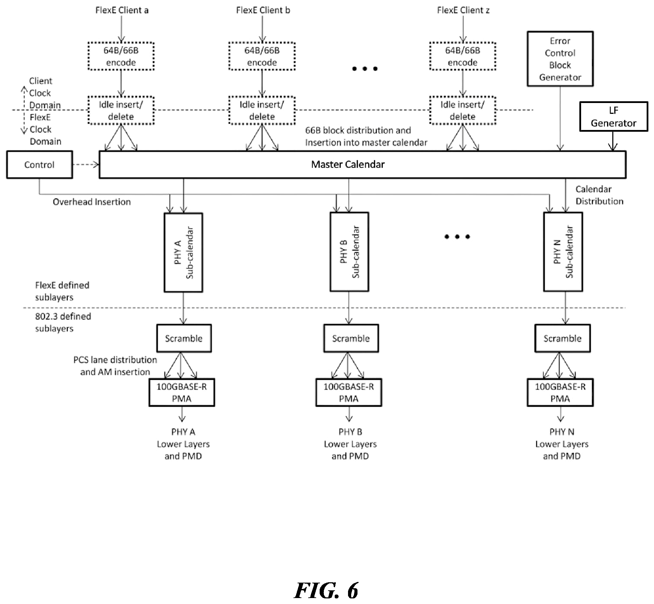

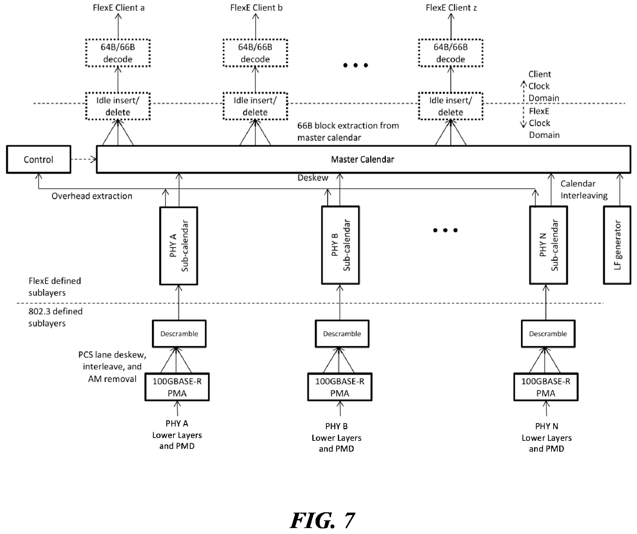

FIG. 6 depicts a schematic diagram illustrating a process in which a FlexE frame is utilized to carry a service. In this process, 64B/66B encoding is first performed on the service stream. Specifically, the service stream is first partitioned into data blocks with a length of 64 bits (8 bytes). Subsequently, 64B/66B encoding is performed on the 64-bit data blocks to obtain 66-bit information blocks. By means of 64B/66B encoding, the service stream can be converted into an information block stream with a length of 66 bits. Then, an idle block is inserted into or deleted from the information block stream. The rate of the information block stream is adjusted to adapt to the rate of the master calendar in the FlexE protocol. Then, the 66-bit information blocks are mapped into the master calendar of the FlexE protocol according to a timeslot configuration. In the FlexE protocol, 20 timeslots are designated for each physical layer member (where each of the timeslots corresponds to a 66-bit information block, and a service bandwidth of 5 Gbit/s is represented by each of the timeslots). Provided that four physical layer members are present, a total of 80 timeslots are encompassed in the master calendar. By means of associated configuration information, the specific timeslots selected to carry the information block stream of each service can be determined. Subsequently, all timeslots are grouped by the master calendar into sets of 20 timeslots, which are allocated to each physical layer member defined by the FlexE protocol. FlexE overhead blocks are inserted by each physical layer member based on these timeslots. Specifically, the overhead block also features a length of 66 bits, and one overhead block is inserted at an interval of 20* 1023 timeslots. In FIG. 6, each physical layer member can be regarded as a sub calendar. A information block stream is carried and transferred by means of a physical layer member. Once a FlexE overhead block is inserted, scrambling is performed by each physical layer member on the carried information block stream. Then, the scrambled information block stream is transmitted out by means of a Payload Mapping Agent (PMA). At a receiving end, as shown in FIG. 7, once the information block stream is received by the PMA, descrambling is first preformed to restore the information block stream into a plurality of 66-bit information blocks. Among these 66-bit information blocks, the FlexE overhead block is searched for by each physical layer member. The FlexE frame structure is restored utilizing the overhead block as a reference position to obtain the sub calendar. Then, the timeslots of all physical layer members are arranged in sequence to restore the master calendar structure. Subsequently, based on the associated configuration information, the information blocks are extracted from corresponding timeslots in the master calendar. The idle information blocks are deleted. Then, 66B/64B decoding is performed to restore an original service stream.

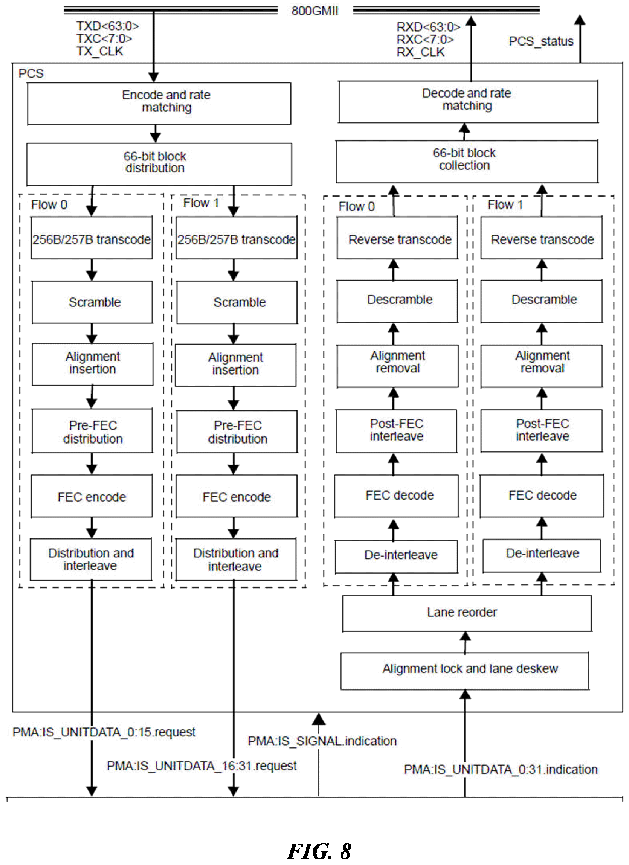

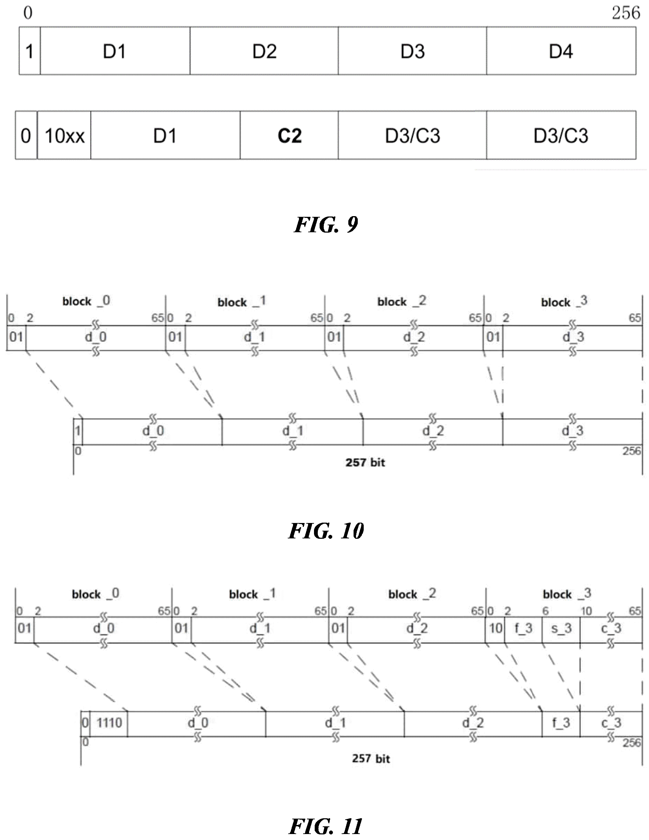

Along with the increase in the transmission speed of a physical interface, in order to reliably transfer information bits, 66-bit blocks are required to be further encoded by the Ethernet physical interface. By way of example, four 66-bit blocks are encoded to generate a single 257-bit block, and the 257-bit block is then transferred. Once the four 66-bit blocks are converted into a 257-bit block, a total of 7 bits can be conserved. Following this conservation of bits, Forward Error Correction (FEC) bits can be inserted. Accordingly, error correction and verification can be performed on the transferred service block with the condition that the total quantity of bits remains unchanged satisfied, whereby the transfer quality of the block is improved. As illustrated in FIG. 8, which depicts a data processing flow mandated by the 800 Gbit/s Ethernet interface standard, the 66-bit blocks are grouped into two groups. 66B/257B encoding is required to be performed on the 66-bit blocks in each of the groups. Blocks having a length of 257 bits are transmitted and output after being processed by various modules, such as a scramble module, an alignment insert module, and an FEC module. As can be seen from FIG. 8, blocks with a block length of 257 bits are primarily processed by a PCS layer. The structure of the 257-bit block is shown in FIG. 9. The total block length of the 257-bit block is 257 bits (from 0 to 256). Specifically, the first bit is the synchronization header of the 257-bit block. A synchronization header value of '1' indicates that the 257-bit block is a data block. The block is composed of 1 synchronization header and 4 content fields. The 256 bits subsequent to the synchronization header correspond to 4 content fields (D1 to D4). In this regard, the content of each of the content fields includes the 8 bytes (64 bits) of content situated at trailing positions within the 66-bit block. A synchronization header value of '0' indicates that the 257-bit block is a block containing a control block. The block is composed of 1 synchronization header, one 4-bit type field, and 4 content fields (D1 to D4). The content of the 4-bit type field (bit 1 to bit 4) following the synchronization header represents a type value, which is configured to indicate the content types of the subsequent 4 content fields, where each of the bits corresponds to the content type of one respective content field. For instance, when the value of the type field is '1', it indicates that the content type of the corresponding subsequent content field is a data block type. Conversely, when the value of the type field is '0', it indicates that the content type of the corresponding subsequent content field is a control block type. The last 252 bits in the 257-bit block correspond to the 4 content fields, where three of the content fields have a length of 64 bits, and the remaining one content field has a length of 60 bits (the length of the first control block type is 60). In the example depicted in FIG. 9, assume the type field is '10xx', which indicates that the first content field is a data block, the second content field is a control block, and the third and fourth content fields are blocks of arbitrary types. Accordingly, the length of the first content field is 64 bits, the length of the second content field is 60 bits, and the length of each of the third and fourth content fields is 64 bits.

The 66B/257B encoding rules formulated in the Ethernet standard, that is, the rules for encoding four 66-bit blocks into one 257-bit block, are set forth follows:
1. When all of the four 66-bit blocks are data blocks, the encoded 257-bit block is composed of two parts: a synchronization header with a length of 1 bit and a payload region with a length of 256 bits. In this case, only a single bit is included in the synchronization header, with the value '1' indicating that the subsequent content consists of 4 data fields. The payload is composed of the 4 data fields. The content of these 4 data fields corresponds to the content of the four 66-bit blocks, with each of the data fields containing 8 bytes of content.
2. When data blocks and control blocks are included in the four 66-bit blocks, or when all of the four 66-bit blocks are control blocks, the encoded 257-bit block is composed of three parts: a synchronization header, a type region, and a payload region. In this case, only a single bit is included in the synchronization header, with the value '0'. The type region immediately follows the synchronization header. The type region is composed of 4 bits, where each of the bits indicates the respective content type of the 4 data fields in the subsequent payload region. When the value in the type region is '1', it indicates that the content of the corresponding data field is the content of a 66-bit block. When the value in the type region is '0', it indicates that the content of the corresponding data field is the content of a control block. The payload region following the type region consists of 4 data fields, and the content of these 4 data fields corresponds to the content of the four 66-bit blocks. For the first control-type block among the four 66-bit blocks, only half of the content in the block type field of the original control-type block (e.g., the content of the 'f' field having a length of 4 bits as discussed above) and the subsequent 7 bytes of content are preserved. Conversely, the other data blocks among the four 66-bit blocks, along with all control blocks following the first control-type block, stores the full 8 bytes of content within the block.

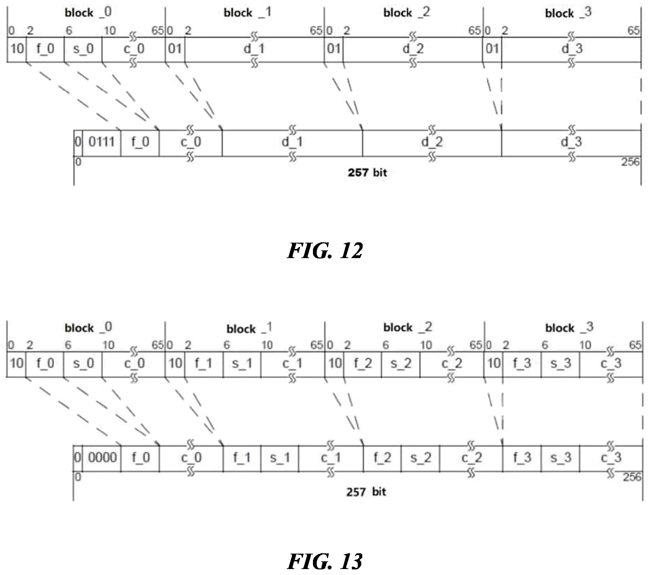

FIG. 10 depicts the encoding rules for encoding into a 257-bit block when all four 66-bit blocks are data blocks. In FIG. 10, the content of the synchronization header in the 66-bit data block is '01', and the synchronization header of the encoded 257-bit block is '1'. The 8 bytes of content of each of the four 66-bit data blocks are located after the synchronization header of the 257-bit block. FIG. 11 depicts the encoding rules for encoding 66-bit blocks into a 257-bit block when the four 66-bit blocks include three data blocks and one control block. In FIG. 11, the value of the synchronization header of the 257-bit block is '0'. The content of the control field is '1110', indicating the block is composed of three 66-bit data blocks and one 66-bit control block. The content subsequent to the control field is the content of three 66-bit data blocks and the content of one 66-bit control block. For the content of this 66-bit control block, only 60 bits thereof are preserved, that is, half of the content of the block type field in the original block of the 66-bit control block (e.g., the content of the 'f' field with a length of 4 bits discussed above) and the subsequent 7 bytes of content. FIG. 12 depicts the encoding rules for encoding 66-bit blocks into a 257-bit block when the four 66-bit blocks include one control block and three data blocks. In FIG. 12, the value of the synchronization header of the 257-bit block is '0'. The content of the control field is '0111', indicating the block is composed of one 66-bit control block and three 66-bit data blocks. For the content of this 66-bit control block, only 60 bits thereof are preserved, that is, half of the content of the block type field in the original block of the 66-bit control block (e.g., the content of the 'f' field with a length of 4 bits discussed above) and the subsequent 7 bytes of content. The content of the three 66-bit data blocks is located subsequent to the content of the 66-bit control block. FIG. 13 depicts the encoding rules for encoding 66-bit blocks into a 257-bit block when all four 66-bit blocks are control blocks. In FIG. 13, the value of the synchronization header of the 257-bit block is '0', and the content of the control field is '0000'. Following the control field is half of the content of the block type field in the original block of the first 66-bit control block (e.g., the content of the 'f' field with a length of 4 bits discussed above) and the subsequent 7 bytes of content. Then follows the 8 bytes of content of the remaining three 66-bit control blocks.

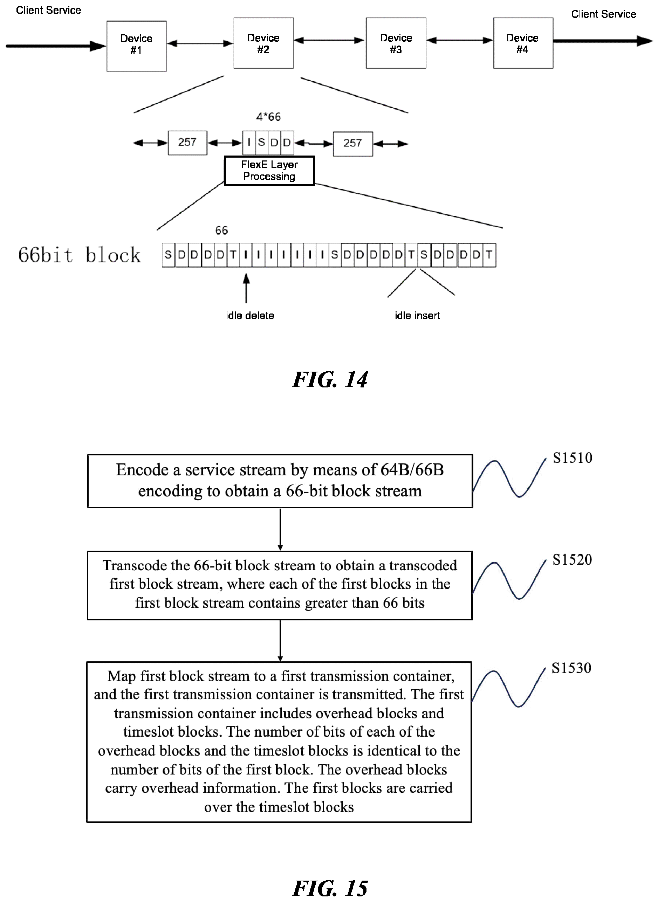

In the current application scenarios, the signal format processed by the optical module interface at the physical layer is a 257-bit block format, while the signal format processed at the FlexE layer is a 66-bit block format. Therefore, two formats of blocks are required to be processed by the optical module. Once a service stream is received by a receiving port of a device, a 257-bit block is first identified within the service stream. Then, one 257-bit block is converted into four 66-bit blocks, as shown in FIG. 14. Framing of the FlexE frame is then performed within the 66-bit blocks. Subsequently, each timeslot is determined in accordance with the FlexE protocol, and 66-bit blocks of each service stream are identified according to the information carried over each timeslot. For each service stream, cross-processing of the stream of service blocks is performed with 66-bit blocks as units. Then, transmission to a corresponding transmitting port is performed. The rate at which the service stream is received by a receiving port of a device is determined by an upstream device, and the rate of the transmitting port of the device is determined by the device itself. The processing rate of the receiving port and the processing rate of the transmitting port might be inconsistent. For the transmitting port, rate adjustment of the service block stream is implemented by addition or deletion of idle blocks in the service stream to adapt to the rate of the FlexE frame in the transmitting direction. The service stream having undergone rate adjustment will be mapped to FlexE frames of the transmitting port. Finally, the 66-bit blocks of the FlexE frames are converted into 257-bit blocks and transmitted from the transmitting port.

In the current FlexE standard, each timeslot corresponds to one 66-bit block, and each 66-bit block represents a transfer rate of 5 Gbit/s. However, data processing in Ethernet interfaces of high-rate such as 800 Gbit/s is conducted according to a 257-bit length. With the condition of a rate of 800 Gbit/s satisfied, if data processing is still conducted by the FlexE protocol according to the rule that each timeslot corresponds to a 66-bit length and each timeslot represents a speed of 5 Gbit/s, a considerably large number of timeslots to be processed will be caused. Accordingly, the efficiency of data processing will be reduced. Moreover, for an intermediate device, a conversion from a 257-bit block to a 66-bit block is required to be first performed within the intermediate device, and then a conversion from the 66-bit block to the 257-bit block is required to be performed. That is, two block encoding format conversions are required to be performed, whereby an excessively high cost of the processing circuit will be caused.

In order to improve the transmission bandwidth of a single timeslot, reduce the number of timeslots to be processed, and thereby improve the efficiency of data processing, a method for processing service streams, a network device, a computer-readable storage medium, and a computer program product are provided according to various embodiments of the present application. Thereby, once a service stream is encoded by means of 64B/66B encoding to obtain a stream of 66-bit blocks, the stream of 66-bit blocks are first transcoded to obtain a stream of first blocks each having greater than 66 bits. Then, the stream of first blocks each having greater than 66 bits is mapped to a first transmission container, and the first transmission container is transmitted. Because the first transmission container includes overhead block(s) and timeslot block(s), where the number of bits of each of the overhead block(s) and the timeslot block(s) is identical to the number of bits of each first block in the stream of first blocks, and the overhead information is carried by the overhead block, and the first blocks are carried by the timeslot blocks, more service information can be carried in the timeslot blocks. Accordingly, the transmission bandwidth of a single timeslot can be improved, and the number of timeslots to be processed can be reduced, whereby the efficiency of data processing can be improved.

Several embodiments of the present application will be further illustrated with reference to the drawings.

FIG. 15 depicts a flowchart showing a method for service processing according to an embodiment of the present application. The method may be performed by a transmitting end device, and includes, without limitations, operations S1510 to S1530.

At operation S1510, a service stream is encoded by means of 64B/66B encoding to obtain a 66-bit block stream.

At operation S1520, the 66-bit block stream is transcoded to obtain a transcoded first block stream, where each of the first blocks in the first block stream contains greater than 66 bits.

At operation S1530, the first block stream is mapped to a first transmission container, and the first transmission container is transmitted. The first transmission container includes overhead blocks and timeslot blocks. The number of bits of each of the overhead blocks and the timeslot blocks is identical to the number of bits of the first block. The overhead blocks carry overhead information. The first blocks are carried over the timeslot blocks.

In a possible implementation, the service stream may be general Ethernet service information or service information of high quality of service (QoS). For instance, the service information of high QoS may be a CBR service, Ethernet service information of high QoS (e.g., ethernet Common Public Radio Interface (eCPRI) service information), voice service information, video service information, gaming service information, or the like, and the present application is not limited thereto. In this regard, the service information of high QoS can be encapsulated in various formats, such as an eCPRI protocol message format or an Ethernet packet format. The general Ethernet service information may be download service information, or the like, and the present application is not limited thereto.

In a possible implementation, the transcoding performed on the 66-bit block stream may be 66B/257B encoding. Therefore, the transcoded first block may be a block having a length of 257 bits.

In a possible implementation, the timeslot blocks are blocks transmitted over a timeslot.

In a possible implementation, the overhead blocks can include a first overhead block and a second overhead block. The overhead blocks in the first transmission container are spaced apart by a fixed number of timeslot blocks. For example, the overhead blocks in the first transmission container are spaced apart by 4*1023*5 timeslot blocks. In addition, the blocks in the first transmission container can be arranged according to the sequence of a first overhead block, a plurality of timeslot blocks, a second overhead block, and a plurality of timeslot blocks. Overhead of the first four overhead blocks in a FlexE overhead frame can be carried over the first overhead block. Overhead of the last four overhead blocks in the FlexE overhead frame can be carried over the second overhead block. In an embodiment, each of the first overhead block, the timeslot blocks, and the second overhead block can have a length of 257 bits. Therefore, a new FlexE frame based on a length of 257 bits set forth in the embodiments of the present application can be formed by the first transmission container arranged according to the sequence of a first overhead block, a plurality of timeslot blocks, a second overhead block, and a plurality of timeslot blocks.

In a feasible implementation, the first overhead block includes a first synchronization header, a first block type region, a first overhead region, a second overhead region, a third overhead region, and a fourth overhead region. The first block type field is indicative of the type of the first overhead region, the second overhead region, the third overhead region, and the fourth overhead region. The overhead of the first overhead block in a FlexE overhead frame can be carried in the first overhead region. The overhead of the second overhead block in a FlexE overhead frame can be carried in the second overhead region. The overhead of the third overhead block in a FlexE overhead frame can be carried in the third overhead region. The overhead of the fourth overhead block in a FlexE overhead frame can be carried in the fourth overhead region. The first overhead region can include a first overhead field and a second overhead field. A part of the first byte of the first overhead block in a FlexE overhead frame can be carried in the first overhead field. The last seven bytes of the first overhead block in the FlexE overhead frame can be carried by the second overhead field.

In a feasible implementation, when the last four overhead blocks in the FlexE overhead frame are all data blocks, the second overhead block can include a second synchronization header, a fifth overhead region, a sixth overhead region, a seventh overhead region, and an eighth overhead region. Overhead of the fifth overhead block in the FlexE overhead frame can be carried in the fifth overhead region. Overhead of the sixth overhead block in the FlexE overhead frame can be carried in the sixth overhead region. Overhead of the seventh overhead block in the FlexE overhead frame can be carried in the seventh overhead region. Overhead of the eighth overhead block in the FlexE overhead frame can be carried in the eighth overhead region.

In a feasible implementation, when a control block is present in the last four overhead blocks in the FlexE overhead frame, the second overhead block can include a second synchronization header, a second block type region, a fifth overhead region, a sixth overhead region, a seventh overhead region, and an eighth overhead region. The second block type region is indicative of the type of the fifth overhead region, the sixth overhead region, the seventh overhead region, and the eighth overhead region. Overhead of the fifth overhead block in the FlexE overhead frame can be carried in the fifth overhead region. Overhead of the sixth overhead block in the FlexE overhead frame can be carried in the sixth overhead region. Overhead of the seventh overhead block in the FlexE overhead frame can be carried in the seventh overhead region. Overhead of the eighth overhead block in the FlexE overhead frame can be carried in the eighth overhead region.

In a feasible implementation, when the first overhead block in the last four overhead blocks in the FlexE overhead frame is a control block, that is, when the fifth overhead block in the FlexE overhead frame is a control block, the fifth overhead region can include a third overhead field and a fourth overhead field. A part of the first byte of the fifth overhead block in the FlexE overhead frame can be carried in the third overhead field. The last seven bytes of the fifth overhead block in the FlexE overhead frame can be carried in the fourth overhead field.

In a feasible implementation, when the second overhead block in the last four overhead blocks in the FlexE overhead frame is a control block, that is, when the sixth overhead block in the FlexE overhead frame is a control block, the sixth overhead region can include a third overhead field and a fourth overhead field. A part of the first byte of the sixth overhead block in the FlexE overhead frame can be carried in the third overhead field. The last seven bytes of the sixth overhead block in the FlexE overhead frame can be carried in the fourth overhead field.

In a feasible implementation, when the third overhead block among the last four overhead blocks in the FlexE overhead frame is a control block, that is, when the seventh overhead block in the FlexE overhead frame is a control block, the seventh overhead region can include a third overhead field and a fourth overhead field. A part of the first byte content of the seventh overhead block in the FlexE overhead frame can be carried by the third overhead field. The last seven bytes of the seventh overhead block in the FlexE overhead frame can be carried by the fourth overhead field.

In a feasible implementation, when the fourth overhead block in the last four overhead blocks in the FlexE overhead frame is a control block, that is, when the eighth overhead block in the FlexE overhead frame is a control block, the eighth overhead region can include a third overhead field and a fourth overhead field. A part of the first byte of the eighth overhead block in the FlexE overhead frame can be carried in the third overhead field. The last seven bytes of the eighth overhead block in the FlexE overhead frame can be carried in the fourth overhead field.

According to the method for processing service streams including operations S1510 to S1530 discussed above, once a service stream is encoded by means of 64B/66B encoding to obtain a stream of 66-bit blocks, the stream of 66-bit blocks are first transcoded to obtain a stream of first blocks each having greater than 66 bits. Then, the stream of first blocks each having greater than 66 bits is mapped to a first transmission container, and the first transmission container is transmitted. Because the first transmission container includes overhead block(s) and timeslot block(s), where the number of bits of each of the overhead block(s) and the timeslot block(s) is identical to the number of bits of each first block in the stream of first blocks, and the overhead information is carried by the overhead block, and the first blocks are carried by the timeslot blocks, more service information can be carried in the timeslot blocks. Accordingly, the transmission bandwidth of a single timeslot can be improved, and the number of timeslots to be processed can be reduced, whereby the efficiency of data processing can be improved.

In an embodiment, during the transcoding of the 66-bit block stream to acquire the transcoded first block stream, a 66-bit idle block is inserted into or deleted from the 66-bit block stream to yield a rate-adapted 66-bit block stream. Transcoding is subsequently performed on the rate-adapted 66-bit block stream to derive the transcoded first block stream. By inserting or deleting the 66-bit idle block within the 66-bit block stream, rate adjustment of the 66-bit block stream is realized. This facilitates rate adaptation between the service stream and the carrying timeslot, whereby the transmission efficiency of the service stream is enhanced.

In an embodiment, during the transcoding of the rate adapted 66-bit block stream to acquire the transcoded first block stream, a position adjustment is applied to a plurality of the 66-bit idle blocks within the rate-adapted 66-bit block stream to obtain an aggregated 66-bit block stream. Transcoding is subsequently performed on the aggregated 66-bit block stream to acquire the transcoded first block stream. By applying the position adjustment to the plurality of 66-bit idle blocks to aggregate them, the plurality of 66-bit idle blocks can be clustered together. This clustering is advantageous during subsequent transcoding, as the clustered 66-bit idle blocks can be converted into a target idle block (e.g., a 257-bit idle block) having a bit count identical to that of the first block. Accordingly, the deletion of the generated target idle block is facilitated, thereby implementing rate adjustment for the first block stream.

In an embodiment, during the transcoding of the 66-bit block stream, a 66-bit idle block can initially be inserted into or deleted from the 66-bit block stream to yield an idle block group constituted by four consecutive 66-bit idle blocks. Transcoding is then performed on the idle block group to derive a target idle block, where the number of bits of the target idle block is identical to the number of bits of the first block.

In an embodiment, during the transcoding of the 66-bit block stream, when a preset specific condition exists among four consecutive 66-bit blocks subject to the same transcoding operation, a 66-bit idle block is inserted or deleted between a terminate block and a start block, such that the terminate block is positioned within a set of four consecutive 66-bit blocks of a previous transcoding operation, and the start block is positioned within a set of four consecutive 66-bit blocks of a subsequent transcoding operation. The preset specific condition includes one of the following:
In the four consecutive 66-bit blocks, a first 66-bit block is the terminate block, a second 66-bit block is the start block, and each of a third 66-bit block and a fourth 66-bit block is a block of an arbitrary type. In the four consecutive 66-bit blocks, the first 66-bit block is the terminate block, each of the second 66-bit block and the fourth 66-bit block is a block of an arbitrary type, and the third 66-bit block is the terminate block. In the four consecutive 66-bit blocks, the first 66-bit block is the terminate block, each of the second 66-bit block and the third 66-bit block is a block of an arbitrary type, and the fourth 66-bit block is the start block. In the four consecutive 66-bit blocks, each of the first 66-bit block and the fourth 66-bit block is a block of an arbitrary type, the second 66-bit block is the terminate block, and the third 66-bit block is the start block. In the four consecutive 66-bit blocks, each of the first 66-bit block and the third 66-bit block is a block of an arbitrary type, the second 66-bit block is the terminate block, and the fourth 66-bit block is the start block. In the four consecutive 66-bit blocks, each of the first 66-bit block and the second 66-bit block is a block of an arbitrary type, the third 66-bit block is the terminate block, and the fourth 66-bit block is the start block.

In an embodiment, when mapping the first block stream to the first transmission container, the target idle block is inserted into or deleted from the first block stream to yield a rate-adapted first block stream. In this regard, the number of bits of the target idle block is identical to the number of bits of the first block. The rate-adapted first block stream is then mapped to the first transmission container. By inserting or deleting the target idle block within the first block stream, rate adjustment of the first block stream is realized. This facilitates rate adaptation between the service stream and the carrying timeslot, whereby the transmission efficiency of the service stream is enhanced.

In an embodiment, when mapping the first block stream to the first transmission container, the first block stream can initially be mapped to a plurality of timeslot blocks. The plurality of timeslot blocks are then allocated to respective transmission instances, and a first overhead block and a second overhead block are inserted at preset positions within each of the transmission instances to derive first transmission containers carried by the plurality of transmission instances. A preset number of timeslot blocks are present between the first overhead block and the second overhead block. In an embodiment, the preset number can be 4*1023*5. That is, 4*1023*5 timeslot blocks present between the first overhead block and the second overhead block.

In an embodiment, once the first transmission containers carried by the plurality of transmission instances are obtained, block interleaving can be performed on the first transmission containers carried by the plurality of transmission instances to obtain first target information including the first transmission containers. Then, the first target information is transmitted. In an implementation, during performing the block interleaving on the first transmission containers carried by the plurality of transmission instances to obtain the first target information including the first transmission containers, a padding block can be first inserted into the first transmission container carried by each of the transmission instances to obtain a first candidate transmission container carried by the respective transmission instance. The number of bits of the padding block is identical to the number of bits of the first block. Then, block interleaving is performed on the first candidate transmission containers carried by the plurality of transmission instances to obtain the first target information including the first transmission containers.

It should be noted that in an embodiment, when the rate of an Ethernet physical interface is a rate such as 50 Gbit/s, 200 Gbit/s, 400 Gbit/s, 800 Gbit/s, or 1600 Gbit/s, a padding block is required to be inserted into the first transmission container carried by each of the transmission instances. In this case, once the first target information is received by a subsequent receiving-end device or intermediate device and block de-interleaving is performed on the first target information, the padding block needs to be deleted accordingly. In another embodiment, when the rate of the Ethernet physical interface is 100 Gbit/s, a padding block may not be inserted into the first transmission container carried by each of the transmission instances. Therefore, in this case, once the first target information is received by the subsequent receiving-end device or intermediate device and block de-interleaving is performed on the first target information, no padding block are needed to be deleted.

The method for service processing set forth in the embodiments of the present application is described in greater detail below by way of example.

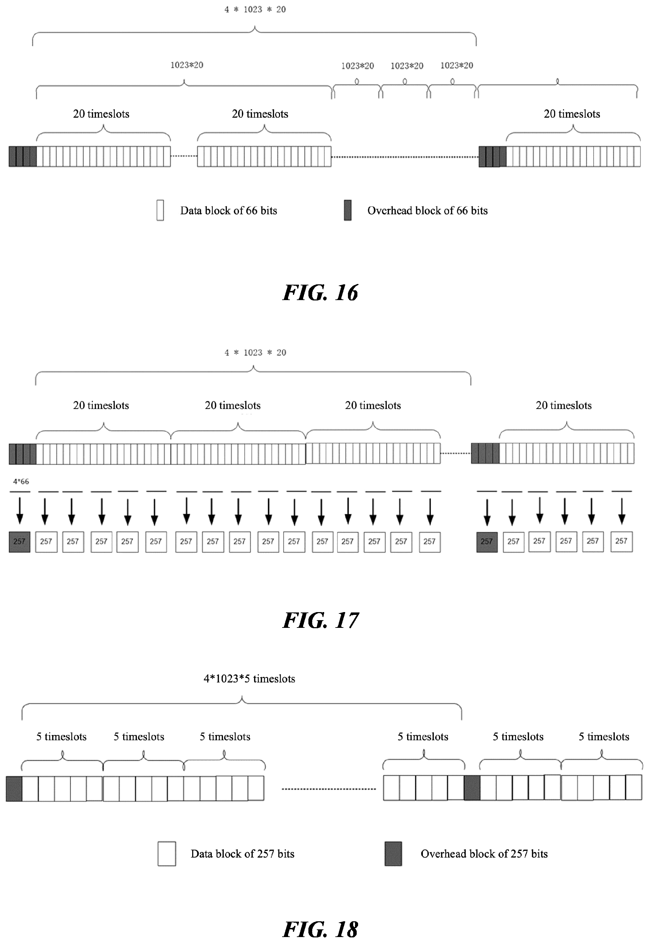

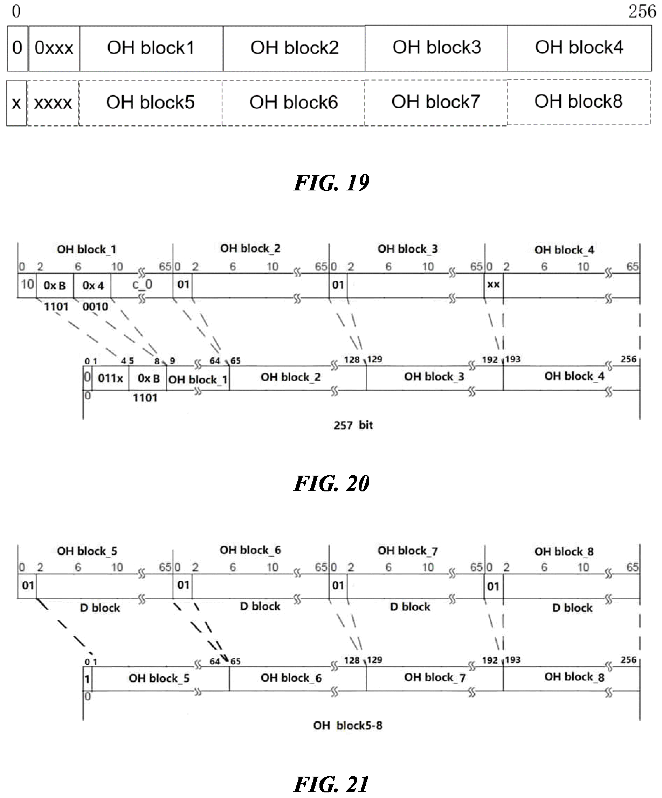

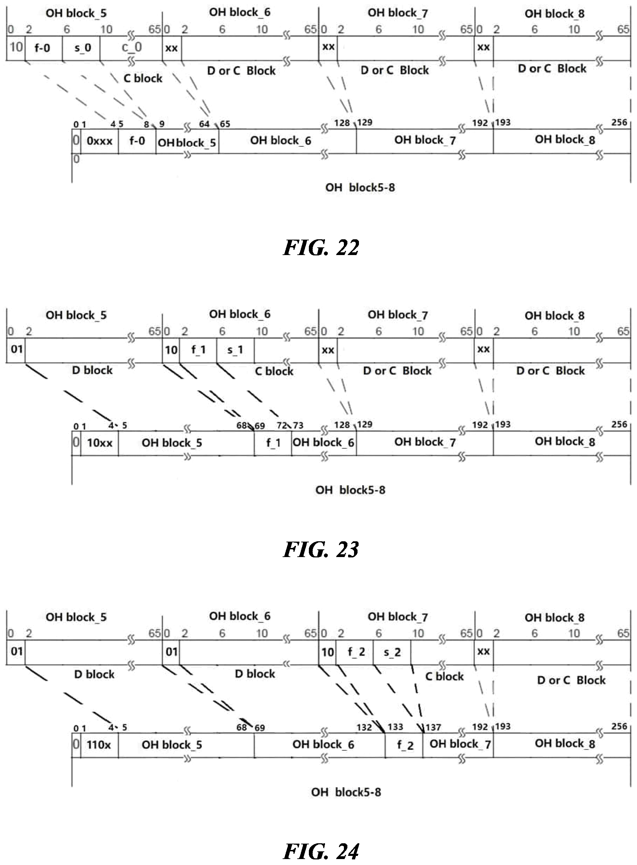

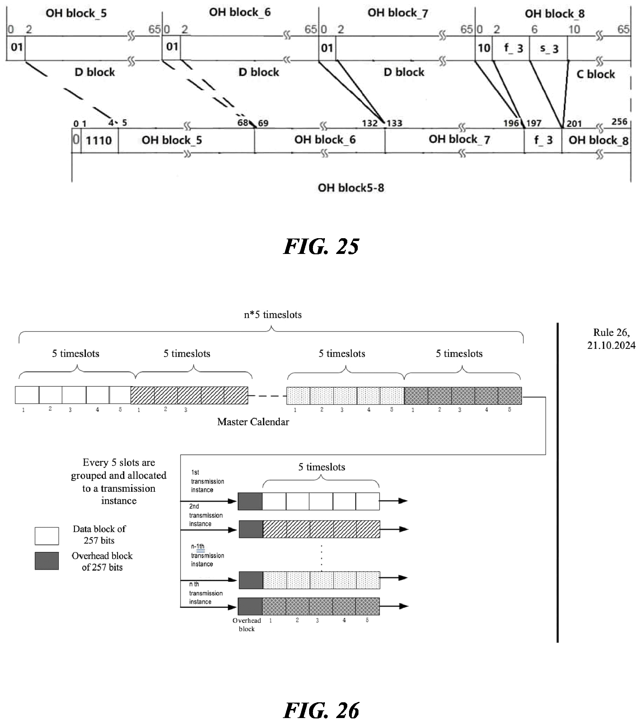

FIG. 16 depicts a schematic diagram illustrating the construction of a new FlexE frame based on a length of 257 bits according to an embodiment of the present application. In a FlexE frame structure of current related technologies, the length of the block is a 66-bit length. The overhead blocks is distributed such that 1 overhead block is provided every interval of 1023*20 blocks. In contrast, in the novel FlexE frame structure set forth in the embodiments of the present application, 4 consecutive overhead blocks are provided every interval of 4* 1023 *20 blocks. The 4 consecutive overhead blocks as shown in FIG. 16 are the first 4 overhead blocks or the last 4 overhead blocks in the FlexE frame structure in current related technologies. Starting from the 4th overhead block, 66B/257B encoding is performed on every 4 blocks, which can be converted into a 257-bit block. This conversion process is shown in FIG. 17. The novel FlexE frame structure is composed of blocks with a length of 257 bits, in which one overhead block with a length of 257 bits is provided every interval of 20*1023 blocks each having a length of 257 bits. Referring to FIG. 18, in the novel FlexE frame structure, a basic block length is 257 bits. Both the service block and the overhead block have a length of 257 bits. Each of the blocks with a length of 257 bits corresponds to one timeslot. Therefore, each of the timeslots can represent a data rate of 20 Gbit/s. A total of 5 timeslots are present in each physical interface member. An overhead block with a length of 257 bits is inserted at every interval of 4*1023*5 number of 257-bit blocks. A FlexE frame is formed by two adjacent overhead blocks with a length of 257 bits. As shown in FIG. 19, block_1, block_2, block_3, and block_4 of the overhead blocks with a length of 66 bits in the FlexE overhead frame is carried in the previous (upper) 257-bit block. Block_5, block_6, block_7, and block_8 of the overhead blocks with a length of 66 bits in the FlexE overhead frame is carried in the subsequent (lower) 257-bit block. Among the 8 overhead blocks of the FlexE overhead frame, the first overhead block is a control block, and the second and third overhead blocks are data blocks. Types of the 4th, 5th, 6th, 7th, and 8th overhead blocks are undetermined, which might be data blocks or control blocks. For a novel FlexE overhead frame composed of two 257-bit blocks, the four overhead blocks with a length of 66 bits in the previous 257-bit block are 1 control block, 2 data blocks, and 1 data block or 1 control block. Because the first 66-bit block is fixed as a control block (characteristic values in the 66-bit block include a block synchronization header bit "10", a block type field value "0x4B", and a sequence value "0x5"), these four overhead blocks with a length of 66 bits in the 257-bit block are stored at fixed positions in the 257-bit block, as shown in FIG. 20. In particular, block 1 of the overhead blocks with a length of 66 bits is located at bit #5 to bit #64 in the 257-bit block (for a block control region, only half of 8 bits are preserved, that is, '0xB' is preserved for '0x4B'). Block 2 is located at bit #65 to bit #128 in the 257-bit block. Block 3 is located at bit #129 to bit #192 in the 257-bit block. Block 4 is located at bit #193 to bit #256 in the 257-bit block. The four overhead blocks with a length of 66 bits in the subsequent 257-bit block are in particular block_5, block_6, block_7, and block_8. Because any of these four overhead blocks with a length of 66 bits, i.e., block_5, block_6, block_7, and block_8, might be a data block or a control block, the position of each of these four 66-bit blocks in the 257-bit block is determined according to the type of the respective one of the 66-bit blocks. When all of block_5, block_6, block_7, and block_8 are data blocks, the position of these four overhead blocks with a length of 66 bits in the 257-bit block is as shown in FIG. 21. When block_5 is a control block (each of block_6, block_7, and block_8 is a block of an arbitrary type), the position of these four 66-bit blocks in the 257-bit block is as shown in FIG. 22. When block_5 is a data block and block_6 is a control block (each of block_7 and block_8 is a block of an arbitrary type), the position of these four 66-bit blocks in the 257-bit block is as shown in FIG. 23. When both block_5 and block_6 are data blocks and block_7 is a control block (block_8 is a block of an arbitrary type), the position of these four 66-bit blocks in the 257-bit block is as shown in FIG. 24. When all of block_5, block_6, and block_7 are data blocks and block_8 is a control block, the position of these four 66-bit blocks in the 257-bit block is as shown in FIG. 25. For combinations of different block types for the four overhead blocks with a length of 66 bits in the FlexE overhead frame (i.e., block_5, block_6, block_7, and block_8), once 66B/257B encoding is performed on these four overhead blocks with a length of 66 bits, each of the 66-bit blocks will be at a fixed position in the 257-bit block. In addition, for an inverse process of 66B/257B encoding (i.e., a process of 66B/257B decoding, or an inverse transcoding process), if an overhead block with a length of 257 bits is obtained, the position of four overhead blocks with a length of 66 bits of the FlexE overhead frame in the 257-bit block can be determined according to the synchronization header bit value and the control type bit value in the 257-bit block. Accordingly, the position of overhead defined by the FlexE protocol in FIG. 6 within a frame composed of two overhead blocks with a length of 257 bits in FIG. 20 can be determined.

In addition, as can be seen from the novel FlexE frame structure based on a length of 257 bits shown in FIG. 18, the length of each of the timeslot block and the overhead block in the FlexE protocol is a block structure with a length of 257 bits. 5 timeslots are present in each physical interface member. Each of the timeslots corresponds to a block with a length of 257 bits. A transfer bandwidth of 20 Gbit/s is represented by each of the timeslots. An overhead block with a length of 257 bits is transferred every interval of 4*1023*5 timeslots. A novel FlexE overhead frame is formed by every 2 overhead blocks with a length of 257 bits. 8 overhead blocks (block_1 to block_8) each having a length of 66 bits in the FlexE overhead frame in current related technologies is carried in each of the novel FlexE overhead frames. All overhead in the novel FlexE overhead frame, such as a C bit, an OMF bit, an RPF bit, a FlexE group number, a PHY number, and a PHY map, is carried in block_1 to block_8.

FIG. 26 depicts a schematic diagram of a FlexE shim layer (master calendar) according to an embodiment of the present application. As can be seen from FIG. 26, the FlexE master calendar is composed of n*5 timeslots (where n is any positive integer). Each of the timeslots corresponds to a block with a length of 257 bits and represents a transmission rate of 20 Gbit/s. Any timeslots can be selected to carry a service stream according to the bandwidth requirement of the service stream. When carrying the service stream, 66B/257B encoding is first performed on the service stream. Once the service stream is converted into a block stream with a length of 257 bits, and is mapped to corresponding timeslots of the FlexE shim layer. Specifically, n*5 timeslot blocks of the FlexE shim layer are shared by n transmission instances each bearing 5 timeslots. In each of the transmission instances, a FlexE overhead block with a length of 257 bits is inserted every interval of 4*1023*5 blocks with a length of 257 bits. A novel FlexE overhead frame is formed by every 2 FlexE overhead blocks with a length of 257 bits. In the novel FlexE overhead frame, 8 overhead blocks with a length of 66 bits defined by the FlexE protocol in current related technologies are included. FlexE overhead is contained in these overhead blocks.

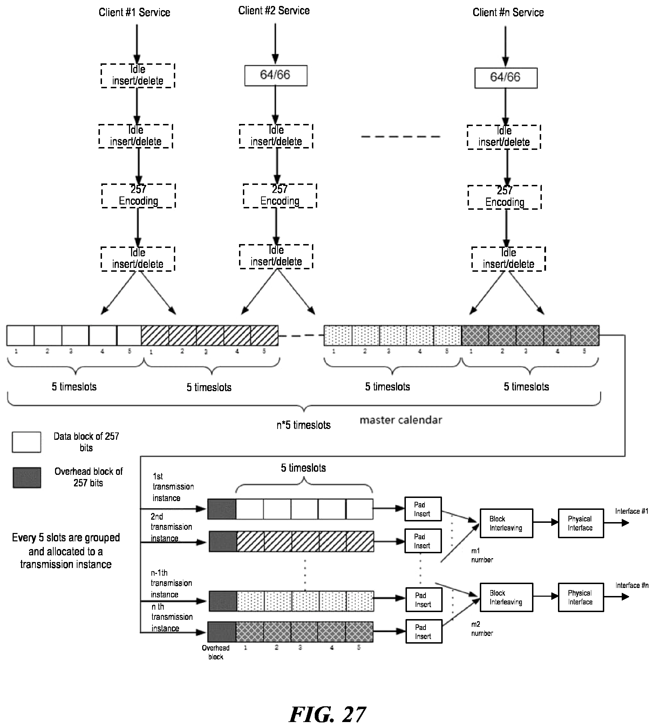

FIG. 27 depicts a flowchart of a method for service processing, which is performed by a transmitting end device, according to an embodiment of the present application. In FIG. 27, an Ethernet packet of each of the services is first encoded by means of 64B/66B encoding to generate a block with a length of 66 bits. Then, 66B/257B encoding is further performed on the block with a length of 66 bits to generate a block with a length of 257 bits. Subsequently, the block with a length of 257 bits is mapped to a corresponding timeslot on the master calendar according to a carrying timeslot selected by the service. In order to realize rate adaptation between service information and a carrying timeslot, rate adaptation can be performed on a service block (e.g., a 66-bit block or a first block with a length of 257 bits). By inserting or deleting some idle blocks (I blocks for short) in a service block stream, the rate of the service block is adjusted to the rate of a corresponding timeslot. Then, mapping is performed to the corresponding timeslot on the master calendar for carrying. Adding and deleting the idle blocks may include two implementations. Implementation#1 is adding or deleting 66-bit blocks. Implementation#1 is performed can be performed between a module performing 64B/66B encoding and a module performing 66B/257B encoding, as shown by a dashed-box indicating idle addition and deletion module in the upper part of FIG. 27. Implementation#2 is adding or deleting 257-bit blocks. Implementation#2 can be performed between the module performing 66B/257B encoding and a master calendar module, as shown by a dashed-box indicating an idle addition and deletion module in the lower part of FIG. 27. Both Implementation#1 and Implementation#2 are possible, and selection can be made therebetween according to practical requirements. It should be noted that, when Implementation#2 is selected, it is required that insertion of an idle block can only be performed between two packets and cannot be performed within a single packet. Hence, it is required that the last 66-bit block in a previous 257-bit block must be a control block, and the first 66-bit block in a subsequent 257-bit block must also be a control block. Only when this condition satisfied by the previous and subsequent 257-bit blocks can a 257-bit idle block be inserted between the previous and subsequent 257-bit blocks. Specifically, the 257-bit idle block is the target idle block discussed above, and the 257-bit idle block is generated by encoding four 66-bit idle blocks. In order to satisfy the condition discussed above, four 66-bit blocks satisfying the requirement can be selected when performing 66B/257B encoding. Among the selected four 66-bit blocks, an S block, a D block, and a T block must only belong to a single one packet, rather than two packets. That is, the selected four 66-bit blocks should not include a T block at a trailer end of a previous packet and a S block at a leading end of a subsequent packet. Therefore, 66B/257B encoding might fail due to the following block combinations.
Combination#1: a T block + a S block + an arbitrary type block + an arbitrary type block.
Combination#2: a T block + an arbitrary type block + an S block + an arbitrary type block.
Combination#3: T block + arbitrary type block + arbitrary type block + S block.
Combination#4: an arbitrary type block + a T block + an S block + an arbitrary type block.
Combination#5: an arbitrary type block + a T block + arbitrary type block + S block.
Combination #6: an arbitrary type block + an arbitrary type block + a T block + an S block.

When performing 66B/257B encoding on any one of the combinations of four 66-bit blocks discussed above, adjustment is required to be performed on the combination of the four 66-bit blocks to be encoded. For example, one or a plurality of 66-bit idle blocks are needed to be inserted or deleted between the T block and the S block. The T block and the S block are grouped into two groups of four 66-bit blocks, whereby only the T block is included in the previous group of four 66-bit blocks with the S block excluded, and the S block is contained in the subsequent group of four 66-bit blocks, with the T block excluded. By means of such encoding adjustment on the previous and subsequent 257-bit blocks, the condition of inserting a 257-bit idle block is satisfied. Therefore, the 257-bit idle block can be inserted during data processing. It is apparent that, during the adjustment discussed above, one or a plurality of 66-bit idle blocks can be inserted or deleted, such that all four 66-bit blocks of a group are idle blocks. Thus, it is convenient to subsequently perform a deletion operation on the 257-bit idle block. Therefore, when performing 66B/257B encoding, some idle blocks with a length of 66 bits can be inserted or deleted, whereby all four 66-bit blocks undergoing 66B/257B encoding are 66-bit idle blocks. Accordingly, 66B/257B encoding can be performed on these four 66-bit idle blocks to obtain an idle block of 257 bits, to allow a subsequent deletion operation on the idle block of 257 bits.

In addition, once a 257-bit block of the service (i.e., the first block) is mapped to the master calendar of 257-bit blocks, n*5 timeslots in the master calendar can be grouped into n transmission instances with 5 timeslots each group. Transmission of 5 timeslots is carried by each of the transmission instances. When 257-bit blocks of 5 timeslots are carried by each of the transmission instances, an overhead block of 257 bits can be inserted. An overhead block of 257 bits is inserted every interval of 4*5*1023 257-bit blocks. A FlexE overhead frame is formed by every two overhead blocks of 257 bits. When information is transferred by a transmission instance at a high-rate physical interface, a pad block (i.e., a padding block) is periodically inserted into each of the transmission instances. Specifically, the pad block can be intended for rate adjustment. Then, block interleaving is performed on the 257-bit blocks of a plurality of transmission instances. Subsequently, interleaved blocks (i.e., the first target information) are transmitted at the physical interface. A transmission rate of each of the transmission instances is 100 Gbit/s. When transmission is performed on a physical interface of 200 Gbit/s, block interleaving is performed on the 257-bit blocks of 2 transmission instances, and then transmission is performed on the physical interface at a rate of 200 Gbit/s. When transmission is performed on a physical interface of 400 Gbit/s, block interleaving is performed on the 257-bit blocks of 4 transmission instances, and then transmission is performed on the physical interface at a rate of 400 Gbit/s. When transmission is performed on a physical interface of 800 Gbit/s, block interleaving is performed on the 257-bit blocks of 8 transmission instances, and then transmission is performed on the physical interface at a rate of 800 Gbit/s. When transmission is performed on a physical interface of 1.6 Tbit/s (i.e., 1600 Gbit/s), block interleaving is performed on the 257-bit blocks of 16 transmission instances, and then transmission is performed on the physical interface at a rate of 1600 Gbit/s. In an embodiment, it is also applicable that 16 transmission instances are grouped into two groups, with 8 transmission instances in each group. Block interleaving is performed on 257-bit blocks of the 8 transmission instances of each group to form an 800 Gbit/s rate block. Then, block interleaving is further performed on the 800 Gbit/s rate blocks of the two groups to form a 1600 Gbit/s block stream. Subsequently, transmission is performed on a physical interface at a rate of 1600 Gbit/s.

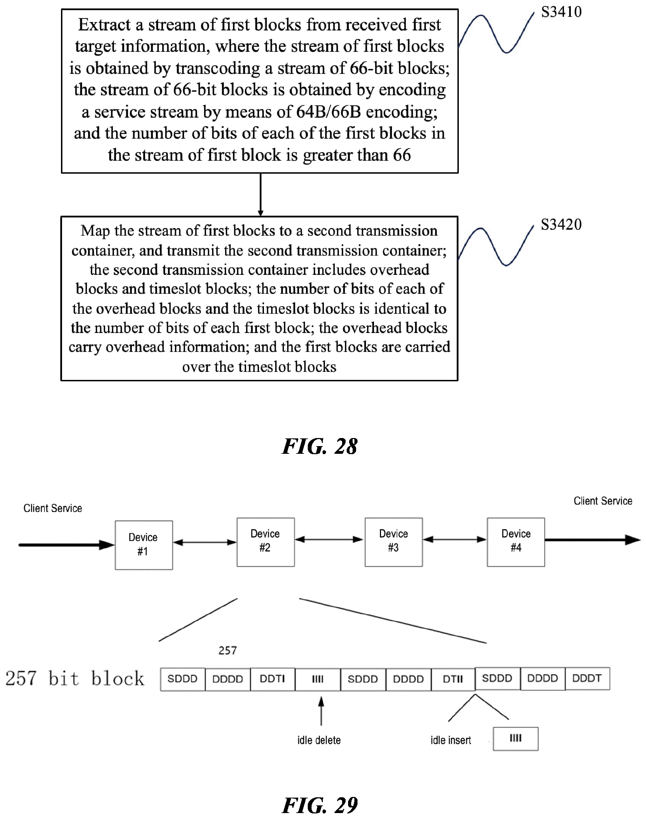

FIG. 28 depicts a flowchart showing a method for service processing according to an embodiment of the present application. The method may be performed by an intermediate device, and includes, without limitations, operations S2810 to S2820.

At operation S2810, a stream of first blocks is extracted from received first target information, where the stream of first blocks is obtained by transcoding a stream of 66-bit blocks. The stream of 66-bit blocks is obtained by encoding a service stream by means of 64B/66B encoding. The number of bits of each of the first blocks in the stream of first block is greater than 66.

At operation S2820, the stream of first blocks is mapped to a second transmission container, and the second transmission container is transmitted. The second transmission container includes overhead blocks and timeslot blocks. The number of bits of each of the overhead blocks and the timeslot blocks is identical to the number of bits of each first block. The overhead blocks carry overhead information. The first blocks are carried over the timeslot blocks.

In a possible implementation, the first target information may be general Ethernet service information or service information of high quality of service (QoS). For instance, the service information of high QoS may be a CBR service, Ethernet service information of high QoS (e.g., eCPRI service information), voice service information, video service information, gaming service information, or the like, and the present application is not limited thereto. In this regard, the service information of high QoS can be encapsulated in various formats, such as an eCPRI protocol message format or an Ethernet packet format. The general Ethernet service information may be download service information, or the like, and the present application is not limited thereto.

In a feasible implementation, the first target information may be obtained by a transmitting-end device by performing block interleaving on first transmission containers carried by a plurality of transmission instances once the stream of first blocks is mapped to the first transmission containers carried by the plurality of transmission instances. Therefore, the received first target information can be transmitted by the transmitting-end device.

In a possible implementation, the transcoding performed on the 66-bit block stream may be 66B/257B encoding. Therefore, the obtained first blocks in the stream of first blocks may be blocks having a length of 257 bits.

In a possible implementation, the timeslot blocks are blocks transmitted over a timeslot.

In a possible implementation, the overhead blocks can include a first overhead block and a second overhead block. The overhead blocks in the second transmission container are spaced apart by a fixed number of timeslot blocks. For example, the overhead blocks in the second transmission container are spaced apart by 4*1023*5 timeslot blocks. In addition, the blocks in the second transmission container can be arranged according to the sequence of a first overhead block, a plurality of timeslot blocks, a second overhead block, and a plurality of timeslot blocks. Overhead of the first four overhead blocks in a FlexE overhead frame can be carried over the first overhead block. Overhead of the last four overhead blocks in the FlexE overhead frame can be carried over the second overhead block. In an embodiment, each of the first overhead block, the timeslot blocks, and the second overhead block can have a length of 257 bits. Therefore, a new FlexE frame based on a length of 257 bits set forth in the embodiments of the present application can be formed by the second transmission container arranged according to the sequence of a first overhead block, a plurality of timeslot blocks, a second overhead block, and a plurality of timeslot blocks.

In a feasible implementation, the first overhead block includes a first synchronization header, a first block type region, a first overhead region, a second overhead region, a third overhead region, and a fourth overhead region. The first block type region is indicative of the type of the first overhead region, the second overhead region, the third overhead region, and the fourth overhead region. The overhead of the first overhead block in a FlexE overhead frame can be carried in the first overhead region. The overhead of the second overhead block in a FlexE overhead frame can be carried in the second overhead region. The overhead of the third overhead block in a FlexE overhead frame can be carried in the third overhead region. The overhead of the fourth overhead block in a FlexE overhead frame can be carried in the fourth overhead region. The first overhead region can include a first overhead field and a second overhead field. A part of the first byte of the first overhead block in a FlexE overhead frame can be carried in the first overhead field. The last seven bytes of the first overhead block in the FlexE overhead frame can be carried by the second overhead field.

In a feasible implementation, when the last four overhead blocks in the FlexE overhead frame are all data blocks, the second overhead block can include a second synchronization header, a fifth overhead region, a sixth overhead region, a seventh overhead region, and an eighth overhead region. Overhead of the fifth overhead block in the FlexE overhead frame can be carried in the fifth overhead region. Overhead of the sixth overhead block in the FlexE overhead frame can be carried in the sixth overhead region. Overhead of the seventh overhead block in the FlexE overhead frame can be carried in the seventh overhead region. Overhead of the eighth overhead block in the FlexE overhead frame can be carried in the eighth overhead region.

In a feasible implementation, when a control block is present in the last four overhead blocks in the FlexE overhead frame, the second overhead block can include a second synchronization header, a second block type region, a fifth overhead region, a sixth overhead region, a seventh overhead region, and an eighth overhead region. The second block type region is indicative of the type of the fifth overhead region, the sixth overhead region, the seventh overhead region, and the eighth overhead region. Overhead of the fifth overhead block in the FlexE overhead frame can be carried in the fifth overhead region. Overhead of the sixth overhead block in the FlexE overhead frame can be carried in the sixth overhead region. Overhead of the seventh overhead block in the FlexE overhead frame can be carried in the seventh overhead region. Overhead of the eighth overhead block in the FlexE overhead frame can be carried in the eighth overhead region.

In a feasible implementation, when the first overhead block in the last four overhead blocks in the FlexE overhead frame is a control block, that is, when the fifth overhead block in the FlexE overhead frame is a control block, the fifth overhead region can include a third overhead field and a fourth overhead field. A part of the first byte of the fifth overhead block in the FlexE overhead frame can be carried in the third overhead field. The last seven bytes of the fifth overhead block in the FlexE overhead frame can be carried in the fourth overhead field.

In a feasible implementation, when the second overhead block in the last four overhead blocks in the FlexE overhead frame is a control block, that is, when the sixth overhead block in the FlexE overhead frame is a control block, the sixth overhead region can include a third overhead field and a fourth overhead field. A part of the first byte of the sixth overhead block in the FlexE overhead frame can be carried in the third overhead field. The last seven bytes of the sixth overhead block in the FlexE overhead frame can be carried in the fourth overhead field.

In a feasible implementation, when the third overhead block among the last four overhead blocks in the FlexE overhead frame is a control block, that is, when the seventh overhead block in the FlexE overhead frame is a control block, the seventh overhead region can include a third overhead field and a fourth overhead field. A part of the first byte content of the seventh overhead block in the FlexE overhead frame can be carried by the third overhead field. The last seven bytes of the seventh overhead block in the FlexE overhead frame can be carried by the fourth overhead field.

In a feasible implementation, when the fourth overhead block in the last four overhead blocks in the FlexE overhead frame is a control block, that is, when the eighth overhead block in the FlexE overhead frame is a control block, the eighth overhead region can include a third overhead field and a fourth overhead field. A part of the first byte of the eighth overhead block in the FlexE overhead frame can be carried in the third overhead field. The last seven bytes of the eighth overhead block in the FlexE overhead frame can be carried in the fourth overhead field.

In this embodiment, by employing the method for service processing including operations S2810 to S2820 discussed above, once the stream of first blocks is extracted from the received first target information, the stream of first blocks can be directly mapped to the second transmission container, and the second transmission container is transmitted. That is, a conversion from a 257-bit block to a 66-bit block is not needed in this process. A conversion from a 66-bit block to a 257-bit block is not needed either. Therefore, the block format between a high-rate Ethernet interface and a FlexE protocol layer can be unified. Accordingly, the cost of a processing circuit can be effectively reduced. In addition, because the number of bits of each of the overhead blocks and the timeslot blocks in the second transmission container is identical to the number of bits of the first blocks, and the overhead information is carried by the overhead blocks, and the first blocks are carried by the timeslot blocks, more service information can be carried in the timeslot blocks. Accordingly, the transmission bandwidth of a single timeslot can be improved, and the number of timeslots to be processed can be reduced, whereby the efficiency of data processing can be improved.

In an embodiment, when mapping the first block stream to the second transmission container, the target idle block is inserted into or deleted from the first block stream to yield a rate-adapted first block stream. In this regard, the number of bits of the target idle block is identical to the number of bits of the first block. The rate-adapted first block stream is then mapped to the second transmission container. By inserting/removing the target idle block into/from the first block stream, rate adjustment of the stream of first blocks can be realized. Accordingly, rate adaptation between the second transmission container and a carrying timeslot can be realized, whereby the transmission efficiency of the second transmission container can be improved.

In an embodiment, under a scenario where the target idle block does not exist in the stream of first blocks but a plurality of 66-bit idle blocks exist in the stream of 66-bit blocks, when removing the target idle blocks from the stream of first block, inverse transcoding can be first performed on the first block stream to obtain the stream of 66-bit blocks. Then, a position adjustment is performed on the plurality of 66-bit idle blocks in the stream of 66-bit blocks to obtain a stream of 66-bit blocks with the 66-bit idle blocks aggregated. Subsequently, transcoding is performed on the stream of 66-bit blocks with the 66-bit idle blocks aggregated to obtain a new stream of first blocks including a plurality of target idle blocks. Subsequently, the target idle blocks are removed from the new stream of first blocks. By applying the position adjustment to the plurality of 66-bit idle blocks to aggregate them, the plurality of 66-bit idle blocks can be clustered together. This clustering is advantageous during transcoding, as the clustered 66-bit idle blocks can be converted into a target idle block (e.g., a 257-bit idle block) having a bit count identical to that of the first block. Accordingly, the deletion of the generated target idle block is facilitated, thereby realizing rate adjustment for the first block stream.

In an embodiment, each first block is obtained by transcoding four consecutive 66-bit blocks. When the last one of four consecutive 66-bit blocks corresponding to a previous first block is not a control block, or the first one of four consecutive 66-bit blocks corresponding to a subsequent first block is not a control block, when inserting a target idle block into the stream of first blocks, inverse transcoding can be first performed on the stream of first blocks to obtain a stream of 66-bit block. Then, a plurality of target block groups constructed of four consecutive 66-bit blocks that satisfy a preset condition are determined in the stream of 66-bit blocks. Subsequently, within the plurality of target block groups, a 66-bit idle block is inserted or deleted between a terminate block and a start block, such that the terminate block is positioned in a previous target block group and the start block is positioned in a subsequent target block group, to obtain a plurality of new target block groups. Then, transcoding is performed on the plurality of new target block groups to obtain a new stream of first blocks. Target idle block is inserted into the new stream of first blocks. The preset condition includes one of the following:
- in a target block group, the first 66-bit block is a terminate block, the second 66-bit block is a start block, and each of the third 66-bit block and the fourth 66-bit block is a block of an arbitrary type;
- in a target block group, the first 66-bit block is a terminate block, each of the second 66-bit block and the fourth 66-bit block is a block of an arbitrary type, and the third 66-bit block is a terminate block; or
- in a target block group, the first 66-bit block is a terminate block, each of the second 66-bit block and the third 66-bit block is a block of an arbitrary type, and the fourth 66-bit block is a start block; or
- in a target block group, each of the first 66-bit block and the fourth 66-bit block is a block of an arbitrary type, the second 66-bit block is a terminate block, and the third 66-bit block is a start block; or
- in a target block group, each of the first 66-bit block and the third 66-bit block is a block of an arbitrary type, the second 66-bit block is a terminate block, and the fourth 66-bit block is a start block; or
- in a target block group, each of the first 66-bit block and the second 66-bit block is a block of an arbitrary type, the third 66-bit block is a terminate block, and the fourth 66-bit block is a start block.

In an embodiment, because the first target information is obtained by performing block interleaving on first transmission containers carried by a plurality of transmission instances once the first block stream is mapped to the first transmission containers carried by the plurality of transmission instances, when extracting the stream of first blocks from the received first target information, block de-interleaving can be first performed on the received first target information to obtain a plurality of first transmission containers. Then, the stream of first blocks is extracted from the plurality of first transmission containers. It should be noted that in an embodiment, when the rate of an Ethernet physical interface is a rate such as 50 Gbit/s, 200 Gbit/s, 400 Gbit/s, 800 Gbit/s, or 1600 Gbit/s, a padding block is inserted by a transmitting-end device into the first transmission container carried by each of the transmission instances. In this case, once block de-interleaving is performed on the first target information by an intermediate device to obtain a plurality of first transmission containers, corresponding padding block deletion processing needs to be performed on these first transmission containers. Then, the stream of first blocks is extracted from the first transmission containers from which the padding blocks have been removed. However, in another embodiment, when the rate of the Ethernet physical interface is 100 Gbit/s, the transmitting-end device may not insert a padding block into the first transmission container carried by each of the transmission instances. In this case, once block de-interleaving is performed on the first target information by the intermediate device to obtain the plurality of first transmission containers, no padding block deletion processing is needed to be performed on these first transmission containers.

In an embodiment, when mapping the first block stream to the second transmission container, the first block stream can initially be mapped to a plurality of timeslot blocks. The plurality of timeslot blocks are then allocated to respective transmission instances, and a first overhead block and a second overhead block are inserted at preset positions within each of the transmission instances to derive second transmission containers carried by the plurality of transmission instances. A preset number of timeslot blocks are present between the first overhead block and the second overhead block. In an embodiment, the preset number can be 4*1023*5. That is, 4*1023*5 timeslot blocks present between the first overhead block and the second overhead block.

In an embodiment, once the second transmission containers carried by the plurality of transmission instances are obtained, block interleaving can be performed on the second transmission containers carried by the plurality of transmission instances to obtain second target information including the second transmission containers. Then, the second target information is transmitted. It should be noted that in an embodiment, when the rate of an Ethernet physical interface is a rate such as 50 Gbit/s, 200 Gbit/s, 400 Gbit/s, 800 Gbit/s, or 1600 Gbit/s, an intermediate device needs to perform block interleaving once a padding block is inserted into the respect second transmission container carried by each of the transmission instances. In this case, once the second target information is received by a subsequent receiving-end device and block de-interleaving is performed on the second target information, the padding block needs to be removed accordingly. In another embodiment, when the rate of the Ethernet physical interface is 100 Gbit/s, a padding block is inserted by the intermediate device into the second transmission container carried by each of the transmission instances. In this case, once the second target information is received by the subsequent receiving-end device and block de-interleaving is performed on the second target information, no padding block is needed to be removed.

It should be noted that in the method for service processing performed by the intermediate device according to an embodiment of the present application, related structural descriptions of the novel FlexE frame based on a length of 257 bits involved therein can be referred to related description content in the previous embodiments, details are not repeated here to avoid redundancy.

The method for service processing performed by the intermediate device according to the embodiments of the present application is described in greater detail below by way of example.

In an embodiment, once the novel FlexE frame structure and timeslot structure set forth in the embodiments of the present application are employed, the blocks of a physical interface layer and a FlexE service layer in all devices in a network can all be blocks with a length of 257 bits. Processing objects of all aspects can also all be based on blocks with a length of 257 bits. As shown in FIG. 29, processing such as framing, timeslot position determination, and extraction of each service block can be performed at the FlexE service layer based on the blocks with a length of 257 bits. In this respect, the service block is also a block with a length of 257 bits. Then, service crossing mapping is further performed to a corresponding output port. At a transmitting port, rate adjustment of the service block can be implemented by performing inserting/removing idle block(s) with a length of 257 bits (i.e., target idle blocks) into/from a service stream, to adapt to a transmission rate of a FlexE frame in a transmitting direction. Then, the rate-adjusted service stream is mapped to a novel FlexE frame based on a length of 257 bits at the transmitting port. Finally, transmission is performed at the transmitting port. In the embodiments of the present application, because all processing aspects are executed based on blocks with a length of 257 bits, a conversion from a 257-bit block to a 66-bit block and a conversion from a 66-bit block to a 257-bit block are eliminated. Accordingly, a block format between a high-rate Ethernet interface and a FlexE protocol layer can be unified, whereby a cost of a processing circuit can be effectively reduced.

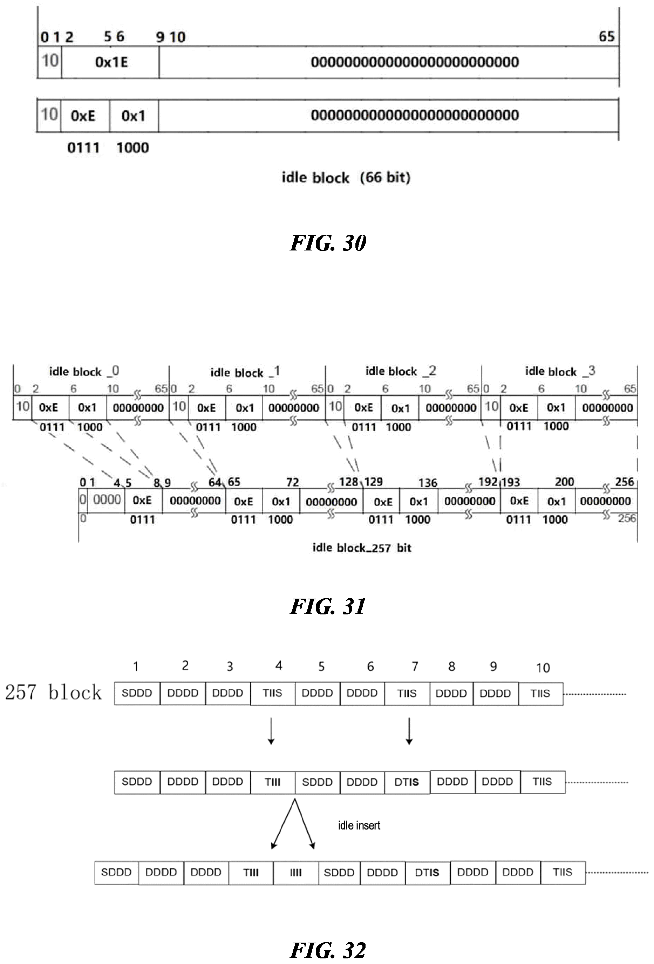

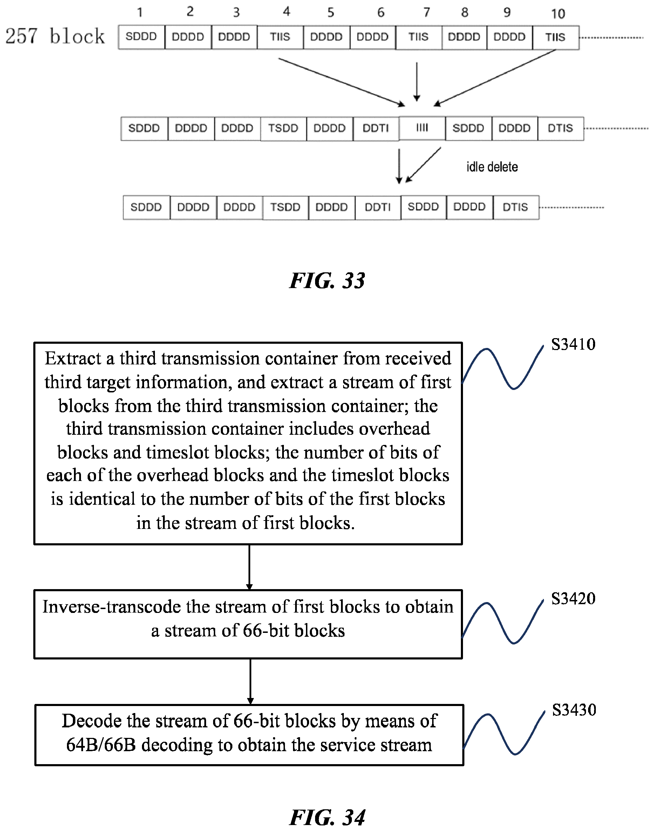

In an embodiment, the structure of a 66-bit idle block (an idle block with a length of 66 bits) is shown in the upper diagram in FIG. 30. The 66-bit idle block is composed of a synchronization header '10', a type control word field '01xE', and 56 zero bits. In this respect, the type control word field is composed of two 4-bit values, which are '0x1' and '0xE', respectively. In the 66-bit block (including the 66-bit idle block), all bits are arranged in reverse order. When dividing '0x1E' into '0x1' and '0xE', sequences of both are required to be placed in reverse order. As shown in the lower diagram in FIG. 30, the positive sequence of 4 bits for '0x1' is '0001', which is required to be presented in reverse order in the 66-bit block, that is, '1000'. Similarly, the forward sequence of 4 bits for '0xE' is '1110', which is required to be presented in reverse order in the 66-bit block, that is, '0111'. As shown in FIG. 31, an idle block with a length of 257 bits is obtained by encoding four idle blocks with a length of 66 bits. The structure of the idle block with a length of 257 bits includes: a synchronization header '0' (located at bit #0), a 4-bit type value '0000' (located from bit #1 to bit #4), a 4-bit characteristic value '0xE' (located from bit #5 to bit #8), three 8-bit characteristic values each being '0x1E' (which is '0xE' and '0x1', respectively, located from bit #65 to bit #72, from bit #129 to bit #136, and from bit #193 to bit #200), and four groups of content values (all of which are '0', located from bit #9 to bit #61, from bit #73 to bit #128, from bit #137 to bit #192, and from bit #201 to bit #256). When an idle block is to be deleted, and if a synchronization header in a block with a length of 257 bits is '0' (located at bit #0), a 4-bit type value is '0000' (located from bit #1 to bit #4), a 4-bit characteristic value is '0xE' (located from bit #5 to bit #8), and three 8-bit characteristic values each being '0x1E' (which is '0xE' and '0x1', respectively, located from bit #65 to bit #72, from bit #129 to bit #136, and from bit #193 to bit #200), then it can be considered that the block is an idle block with a length of 257 bits, on which a removal operation can be performed. When an idle block with a length of 257 bits is to be inserted, and if a 4-bit type value in a previous block with a length of 257 bits is 'xxx0' (located from bit #1 to bit #4, i.e., the last block with a length of 66 bits is a control-type block), and a 4-bit type value in a subsequent block with a length of 257 bits is '0xxx' (located at bit #1 to bit #4, i.e., the first block with a length of 66 bits is a control-type block), then an idle block with a length of 257 bits can be inserted between the previous and subsequent blocks with a length of 257 bits, as shown in FIG. 32. In this manner, an idle block with a length of 257 bits can be inserted into or removed from a stream of blocks with a length of 257 bits, thus achieving rate adjustment of a service stream. When an idle block is to be removed, and if an idle block with a length of 257 bits (a 257-bit block converted from four 66-bit idle blocks, i.e., a target idle block) is determined to be present in a service stream with a length of 257 bits, the idle block with a length of 257 bits can be directly removed. In some scenarios, it is possible that only some 66-bit blocks of the four 66-bit blocks in a 257-bit block are idle blocks, but a situation where all of the four 66-bit blocks in the 257-bit block are 66-bit idle blocks will never occur. That is, a situation where an idle block with a length of 257 bits is never present. This will cause an inability to remove an idle block with a length of 257 bits. In this case, for example, as shown in FIG. 33, position adjustment and movement can be performed on 66-bit idle blocks among a plurality of consecutive 257-bit blocks, such that 66-bit idle blocks at a plurality of different positions can be gathered, to obtain an257-bit block with four 66-bit idle blocks, that is, an idle block with a length of 257 bits is formed. Thus, the idle block with a length of 257 bits can be removed. In addition, in practical application scenarios where an idle block with a length of 257 bits is absent, it is also applicable that a 257-bit block is inverse-transcoded into 66-bit blocks, and 66-bit idle blocks are removed from the stream of 66-bit blocks. Once an appropriate amount of 66-bit idle blocks are removed, the remaining 66-bit blocks are transcoded into a 257-bit block. If rate adjustment of a 257-bit block has already been performed and insertion/removal of a 257-bit idle block has been performed prior to mapping a service to a master calendar at a transmitting end, then the service stream satisfies the condition for inserting/removing the 257-bit idle block when passing through any intermediate device in a network. Accordingly, an insertion or removal of 257-bit idle block(s) can be directly performed. Conversely, if only insertion or removal of a 66-bit idle block has been performed, but rate adjustment of a 257-bit block has not been performed, and no special position adjustment has been performed on four 66-bit blocks of an encoded object when performing 66B/257B encoding (i.e., position adjustment and movement on the 66-bit idle block) prior to mapping a service to a master calendar at a transmitting end, then when the service stream passes through any intermediate device in a network, these intermediate devices might not directly insert or remove a 257-bit idle block.

FIG. 34 depicts a flowchart showing a method for service processing according to an embodiment of the present application. The method may be performed by a receiving end device, and includes, without limitations, operations S3410 to S3430.

At operation S3410, a third transmission container is extracted from received third target information, and a stream of first blocks is extracted from the third transmission container. The third transmission container includes overhead blocks and timeslot blocks. The number of bits of each of the overhead blocks and the timeslot blocks is identical to the number of bits of the first blocks in the stream of first blocks. Overhead information is carried by the overhead blocks. The first blocks are carried by the timeslot blocks. The stream of first blocks is obtained by transcoding a stream of 66-bit blocks. The stream of 66-bit blocks is obtained by encoding a service stream by means of 64B/66B encoding. The number of bits of the first blocks is greater than 66.

At operation S3420, the stream of first blocks is inverse-transcoded to obtain a stream of 66-bit blocks.

At operation S3430, the stream of 66-bit blocks is decoded by means of 64B/66B decoding to obtain the service stream.

In a possible implementation, the third target information may be general Ethernet service information or service information of high quality of service (QoS). For instance, the service information of high QoS may be a CBR service, Ethernet service information of high QoS (e.g., eCPRI service information), voice service information, video service information, gaming service information, or the like, and the present application is not limited thereto. In this regard, the service information of high QoS can be encapsulated in various formats, such as an eCPRI protocol message format or an Ethernet packet format. The general Ethernet service information may be download service information, or the like, and the present application is not limited thereto.

In a feasible implementation, the third target information may be obtained by a transmitting-end device by performing block interleaving on first transmission containers carried by a plurality of transmission instances once the stream of first blocks is mapped to the first transmission containers carried by the plurality of transmission instances. Therefore, the received third target information can be transmitted by the transmitting-end device. In other words, the third target information can be the first target information described above, and in this case, the third transmission container can be the first transmission container described above.

In a feasible implementation, the third target information may also be obtained by an intermediate device by performing block interleaving on second transmission containers carried by a plurality of transmission instances once the first block stream is mapped to the second transmission containers carried by the plurality of transmission instances. Therefore, the received third target information can also be transmitted by the intermediate device. That is, the third target information can be the second target information discussed above. In this case, the third transmission container can be the second transmission container discussed above.

In a possible implementation, the transcoding performed on the 66-bit block stream may be 66B/257B encoding. Therefore, the obtained first blocks in the stream of first blocks may be blocks having a length of 257 bits.

In a possible implementation, the timeslot blocks are blocks transmitted over a timeslot.

In a possible implementation, the overhead blocks can include a first overhead block and a second overhead block. The overhead blocks in the third transmission container are spaced apart by a fixed number of timeslot blocks. For example, the overhead blocks in the third transmission container are spaced apart by 4*1023*5 timeslot blocks. In addition, the blocks in the third transmission container can be arranged according to the sequence of a first overhead block, a plurality of timeslot blocks, a second overhead block, and a plurality of timeslot blocks. Overhead of the first four overhead blocks in a FlexE overhead frame can be carried over the first overhead block. Overhead of the last four overhead blocks in the FlexE overhead frame can be carried over the second overhead block. In an embodiment, each of the first overhead block, the timeslot blocks, and the second overhead block can have a length of 257 bits. Therefore, a new FlexE frame based on a length of 257 bits set forth in the embodiments of the present application can be formed by the third transmission container arranged according to the sequence of a first overhead block, a plurality of timeslot blocks, a second overhead block, and a plurality of timeslot blocks.

In a feasible implementation, 4*1023*5 timeslot blocks present between the first overhead block and the second overhead block.

In a feasible implementation, the first overhead block includes a first synchronization header, a first block type region, a first overhead region, a second overhead region, a third overhead region, and a fourth overhead region. The first block type field is indicative of the type of the first overhead region, the second overhead region, the third overhead region, and the fourth overhead region. The overhead of the first overhead block in a FlexE overhead frame can be carried in the first overhead region. The overhead of the second overhead block in a FlexE overhead frame can be carried in the second overhead region. The overhead of the third overhead block in a FlexE overhead frame can be carried in the third overhead region. The overhead of the fourth overhead block in a FlexE overhead frame can be carried in the fourth overhead region. The first overhead region can include a first overhead field and a second overhead field. A part of the first byte of the first overhead block in a FlexE overhead frame can be carried in the first overhead field. The last seven bytes of the first overhead block in the FlexE overhead frame can be carried by the second overhead field.

In a feasible implementation, when the last four overhead blocks in the FlexE overhead frame are all data blocks, the second overhead block can include a second synchronization header, a fifth overhead region, a sixth overhead region, a seventh overhead region, and an eighth overhead region. Overhead of the fifth overhead block in the FlexE overhead frame can be carried in the fifth overhead region. Overhead of the sixth overhead block in the FlexE overhead frame can be carried in the sixth overhead region. Overhead of the seventh overhead block in the FlexE overhead frame can be carried in the seventh overhead region. Overhead of the eighth overhead block in the FlexE overhead frame can be carried in the eighth overhead region.

In a feasible implementation, when a control block is present in the last four overhead blocks in the FlexE overhead frame, the second overhead block can include a second synchronization header, a second block type region, a fifth overhead region, a sixth overhead region, a seventh overhead region, and an eighth overhead region. The second block type region is indicative of the type of the fifth overhead region, the sixth overhead region, the seventh overhead region, and the eighth overhead region. Overhead of the fifth overhead block in the FlexE overhead frame can be carried in the fifth overhead region. Overhead of the sixth overhead block in the FlexE overhead frame can be carried in the sixth overhead region. Overhead of the seventh overhead block in the FlexE overhead frame can be carried in the seventh overhead region. Overhead of the eighth overhead block in the FlexE overhead frame can be carried in the eighth overhead region.

In a feasible implementation, when the first overhead block in the last four overhead blocks in the FlexE overhead frame is a control block, that is, when the fifth overhead block in the FlexE overhead frame is a control block, the fifth overhead region can include a third overhead field and a fourth overhead field. A part of the first byte of the fifth overhead block in the FlexE overhead frame can be carried in the third overhead field. The last seven bytes of the fifth overhead block in the FlexE overhead frame can be carried in the fourth overhead field.

In a feasible implementation, when the second overhead block in the last four overhead blocks in the FlexE overhead frame is a control block, that is, when the sixth overhead block in the FlexE overhead frame is a control block, the sixth overhead region can include a third overhead field and a fourth overhead field. A part of the first byte of the sixth overhead block in the FlexE overhead frame can be carried in the third overhead field. The last seven bytes of the sixth overhead block in the FlexE overhead frame can be carried in the fourth overhead field.

In a feasible implementation, when the third overhead block among the last four overhead blocks in the FlexE overhead frame is a control block, that is, when the seventh overhead block in the FlexE overhead frame is a control block, the seventh overhead region can include a third overhead field and a fourth overhead field. A part of the first byte content of the seventh overhead block in the FlexE overhead frame can be carried by the third overhead field. The last seven bytes of the seventh overhead block in the FlexE overhead frame can be carried by the fourth overhead field.

In a feasible implementation, when the fourth overhead block in the last four overhead blocks in the FlexE overhead frame is a control block, that is, when the eighth overhead block in the FlexE overhead frame is a control block, the eighth overhead region can include a third overhead field and a fourth overhead field. A part of the first byte of the eighth overhead block in the FlexE overhead frame can be carried in the third overhead field. The last seven bytes of the eighth overhead block in the FlexE overhead frame can be carried in the fourth overhead field.

In the present embodiment, by employing the method for service processing including operations S3410 to S3430 discussed above, once the third transmission container is extracted from the received third target information, the stream of first blocks is extracted from the third transmission container. Then, the stream of first blocks is inverse-transcoded to restore and obtain the stream of 66-bit blocks. Subsequently, the stream of 66-bit blocks is decoded by means of 64B/66B decoding to restore and obtain the service stream. Because the third transmission container includes overhead blocks and timeslot blocks, and the number of bits of each of the overhead blocks and the timeslot blocks is identical to the number of bits of each of the first blocks in the stream of first blocks, and the overhead information is carried by the overhead blocks, and the first blocks are carried by the timeslot blocks, more service information can be carried in the timeslot blocks. Accordingly, the transmission bandwidth of a single timeslot can be improved, and the number of timeslots to be processed can be reduced, whereby the efficiency of data processing can be improved.

In an embodiment, under a scenario where a plurality of the third transmission containers present, when the third transmission containers are extracted from the received third target information, block de-interleaving can be performed on the received third target information to obtain the plurality of third transmission containers. In this respect, during the performing of block de-interleaving on the received third target information to obtain the plurality of third transmission containers, block de-interleaving can be first performed on the received third target information to obtain a plurality of second candidate transmission containers. Then, a padding block is removed from the plurality of second candidate transmission containers to obtain the plurality of third transmission containers. The number of bits of the padding block is identical to the number of bits of each first block.

It should be noted that in an embodiment, when the rate of an Ethernet physical interface is a rate such as 50 Gbit/s, 200 Gbit/s, 400 Gbit/s, 800 Gbit/s, or 1600 Gbit/s, a padding block will be inserted by a transmitting-end device or an intermediate device into the third transmission container (e.g., the first transmission container or the second transmission container) carried by each of the transmission instances. In this case, once block de-interleaving is performed on the third target information (e.g., the first target information or the second target information) by a receiving-end device to obtain a plurality of second candidate transmission containers, padding block should be removed from these second candidate transmission containers accordingly. However, in another embodiment, when the rate of the Ethernet physical interface is 100 Gbit/s, the transmitting-end device or the intermediate device may not insert a padding block into the third transmission container carried by each of the transmission instances. In this case, once block de-interleaving is performed on the third target information by the receiving end device to obtain the plurality of second candidate transmission containers, no padding block shall be removed from these second candidate transmission containers.

It should be noted that in the method for service processing performed by the receiving end device according to an embodiment of the present application, related structural descriptions of the novel FlexE frame based on a length of 257 bits involved therein can be referred to related description content in the previous embodiments, details are not repeated here to avoid redundancy.

The method for service processing performed by the receiving end device according to the embodiments of the present application is described in greater detail below by way of example.

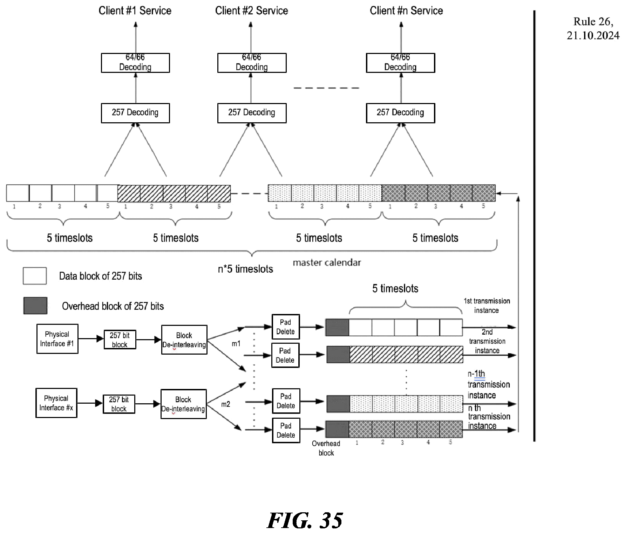

As shown in FIG. 35, in the receiving-end device, once a service stream (e.g., first target information transmitted by the transmitting-end device or second target information transmitted by the intermediate device) is received by each high-rate physical interface, a 257-bit block is first restored from the service stream to obtain a high-rate stream of 257-bit blocks. Then, block de-interleaving is performed on the high-rate stream of 257-bit blocks to obtain block streams of multiple channels of transmission instances (i.e., second candidate transmission containers). The transmission rate the transmission instance at each channel is 100 Gbit/s. For example, block de-interleaving is performed on a stream of 257-bit blocks at a physical interface of 200 Gbit/s to obtain block streams of 2 channels of transmission instances. Alternatively, block de-interleaving is performed on a steam of 257-bit blocks at a physical interface of 400 Gbit/s to obtain block streams of 4 channels of transmission instances. Alternatively, block de-interleaving is performed on a stream of 257-bit blocks at a physical interface of 800 Gbit/s to obtain block streams of 8 channels of transmission instances. Alternatively, block de-interleaving is performed on a stream of 257-bit blocks at a physical interface of 1600 Gbit/s to obtain block streams of 16 channels of transmission instances. In addition, it is also applicable that block de-interleaving is performed on a stream of 257-bit blocks at a physical interface of 1600 Gbit/s to obtain 2 channels of block streams each with a transmission rate of 800 Gbit/s. Specifically, the structure of these 2 channels of block streams each with a transmission rate of 800 Gbit/s is consistent with the structure of a block stream of a physical interface of 800 Gbit/s. Then, block de-interleaving is further performed on the block stream of 800 Gbit/s to obtain block streams of 8 channels of transmission instances. Subsequently, a pad block (i.e., a padding block) is removed from the block stream of the transmission instances of each channel. Then, an overhead block is searched for and located in the transmission instance of each channel, and alignment is performed with the overhead block as a reference. All timeslot blocks of a master calendar (e.g., the shim layer) are sequentially restored in an arrangement of timeslot members of all transmission instances. Specifically, each of the timeslot blocks is a block with a length of 257 bits. Subsequently, according to a carrying timeslot selected by the service, a 257-bit block of the service is extracted from the corresponding timeslot block. Then, inverse transcoding (e.g., 66B/257B decoding) is performed on the 257-bit block to restore a stream of 66-bit blocks. Then, 64B/66B decoding is performed on the stream of 66-bit blocks to restore an original service stream.

According to an embodiment of the present application, a network device is provided. The device includes a memory, a processor, and a computer program stored in the memory and executable on the processor which, when executed by the processor, causes the processor to carry out any one of the methods as described above.

According to an embodiment of the present application, a computer-readable storage medium is provided. The computer-readable storage medium stores a computer-executable instruction which, when executed by a processor, causes the processor to carry out any one of the methods as described above.

According to an embodiment of the present application, a computer program product is provided. The computer program product includes a computer program or a computer instruction stored in a computer-readable storage medium which, when executed by a processor of a computer device, causes the computer device to carry out any one of the methods as described above.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for service processing, comprising:
encoding a service stream by means of 64B/66B encoding to obtain a stream of 66-bit blocks;
transcoding the stream of 66-bit blocks to obtain a transcoded stream of first blocks, wherein each of the first blocks in the stream of first blocks contains more than 66 bits;
mapping the stream of first blocks to a first transmission container, and transmitting the first transmission container, wherein the first transmission container contains overhead blocks and timeslot blocks, a number of bits of each of the overhead blocks and the timeslot blocks is identical to a number of bits of each of the first blocks, overhead information is carried over the overhead blocks, and the first blocks are carried over the timeslot blocks.

2. The method as claimed in claim 1, wherein the overhead blocks comprise a first overhead block and a second overhead block, and the overhead blocks in the first transmission container are spaced apart by the timeslot blocks of a fixed number.

3. The method as claimed in claim 2, wherein overhead of a first four overhead blocks in a Flexible Ethernet (FlexE) overhead frame is carried over the first overhead block; and overhead of a last four overhead blocks in the FlexE overhead frame is carried over the second overhead block.

4. The method as claimed in claim 3, wherein the first overhead block comprises a first synchronization header, a first block type region, a first overhead region, a second overhead region, a third overhead region, and a fourth overhead region; and the first block type region is indicative of types of the first overhead region, the second overhead region, the third overhead region, and the fourth overhead region; overhead of a first overhead block in the FlexE overhead frame is carried in the first overhead region, overhead of a second overhead block in the FlexE overhead frame is carried in the second overhead region, overhead of a third overhead block in the FlexE overhead frame is carried in the third overhead region, and overhead of a fourth overhead block in the FlexE overhead frame is carried in the fourth overhead region.

5. The method as claimed in claim 4, wherein, the first overhead region comprises a first overhead field and a second overhead field; a part of a first byte of the first overhead block in the FlexE overhead frame is carried in the first overhead field; and a last seven bytes of the first overhead block of the FlexE overhead frame is carried by the second overhead field.

6. The method as claimed in claim 3, wherein in response to determining that last four overhead blocks of the FlexE overhead frame are all data blocks, providing a second synchronization header, a fifth overhead region, a sixth overhead region, a seventh overhead region, and an eighth overhead region within the second overhead block; and
overhead of a fifth overhead block in the FlexE overhead frame is carried in the fifth overhead region; overhead of the sixth overhead block in the FlexE overhead frame is carried in the sixth overhead region; overhead of the seventh overhead block in the FlexE overhead frame is carried in the seventh overhead region and overhead of the eighth overhead block in the FlexE overhead frame is carried in the eighth overhead region.

7. The method as claimed in claim 3, wherein in response to determining that a control block presents in last four overhead blocks in the FlexE overhead frame, providing a second synchronization header, a second block type region, a fifth overhead region, a sixth overhead region, a seventh overhead region, and an eighth overhead region in the second overhead block;
wherein the second block type region is indicative of types of the fifth overhead region, the sixth overhead region, the seventh overhead region, and the eighth overhead region; overhead of a fifth overhead block in the FlexE overhead frame is carried in the fifth overhead region; overhead of a sixth overhead block in the FlexE overhead frame is carried in the sixth overhead region; overhead of a seventh overhead block in the FlexE overhead frame is carried in the seventh overhead region; and overhead of the eighth overhead block in the FlexE overhead frame is carried in the eighth overhead region.

8. The method as claimed in claim 7, wherein:
the fifth overhead region comprises a third overhead field and a fourth overhead field, a part of a first byte of the fifth overhead block of the FlexE overhead frame is carried by the third overhead field, and last seven bytes of the fifth overhead block of the FlexE overhead frame is carried by the fourth overhead field;
or,
the sixth overhead region comprises a third overhead field and a fourth overhead field, a part of a first byte of the sixth overhead block of the FlexE overhead frame is carried by the third overhead field, and last seven bytes of the sixth overhead block of the FlexE overhead frame is carried by the fourth overhead field;
or,
the seventh overhead region comprises a third overhead field and a fourth overhead field, a part of a first byte of the seventh overhead block of the FlexE overhead frame is carried by the third overhead field, and last seven bytes of the seventh overhead block of the FlexE overhead frame is carried by the fourth overhead field;
or,
the eighth overhead region comprises a third overhead field and a fourth overhead field, a part of a first byte of the eighth overhead block of the FlexE overhead frame is carried by the third overhead field, and last seven bytes of the eighth overhead block of the FlexE overhead frame is carried by the fourth overhead field.

9. The method as claimed in claim 1, wherein transcoding the stream of 66-bit blocks to obtain the transcoded stream of first blocks, comprises:
inserting a 66-bit idle block into the stream of 66-bit blocks, or removing a 66-bit idle block from the stream of 66-bit blocks, to obtain a rate-adapted stream of 66-bit blocks; and
transcoding the rate-adapted stream of 66-bit blocks to obtain a transcoded stream of first blocks.

10. The method as claimed in claim 9, wherein transcoding the rate-adapted stream of 66-bit blocks to obtain the transcoded stream of first blocks, comprises:
performing a position adjustment on a plurality of 66-bit idle blocks in the rate-adapted stream of 66-bit blocks to obtain the stream of 66-bit blocks with the plurality of 66-bit idle blocks aggregated; and
transcoding the stream of 66-bit blocks with the plurality of 66-bit idle blocks aggregated to obtain the transcoded stream of first blocks.

11. The method as claimed in claim 1, wherein transcoding the stream of 66-bit blocks, comprises:
inserting a 66-bit idle block into the stream of 66-bit blocks or removing a 66-bit idle block from the stream of 66-bit blocks to obtain an idle block group of four consecutive 66-bit idle blocks;
transcoding the idle block group to obtain a target idle block, wherein a number of bits of the target idle block is identical to the number of bits of each of the first blocks.

12. The method as claimed in claim 1, wherein during transcoding the stream of 66-bit blocks, inserting or removing a 66-bit idle block between a terminate block and a start block, such that the terminate block is positioned within a set of four consecutive 66-bit blocks of a previous transcoding operation, and the start block is positioned within a set of four consecutive 66-bit blocks of a subsequent transcoding operation, in response to determining that one of following conditions is satisfied by four consecutive 66-bit blocks of the stream of 66-bit blocks subject to a single transcoding:
in the four consecutive 66-bit blocks, a first 66-bit block is a terminate block, a second 66-bit block is a start block, and each of a third 66-bit block and a fourth 66-bit block is a block of an arbitrary type; or
in the four consecutive 66-bit blocks, a first 66-bit block is a terminate block, each of a second 66-bit block and a fourth 66-bit block is a block of an arbitrary type, and a third 66-bit block is a terminate block; or
in the four consecutive 66-bit blocks, a first 66-bit block is a terminate block, each of a second 66-bit block and a third 66-bit block is a block of an arbitrary type, and a fourth 66-bit block is a start block; or
in the four consecutive 66-bit blocks, each of a first 66-bit block and the fourth 66-bit block is a block of an arbitrary type, a second 66-bit block is a terminate block, and a third 66-bit block is a start block; or
in the four consecutive 66-bit blocks, each of a first 66-bit block and a third 66-bit block is a block of an arbitrary type, a second 66-bit block is a terminate block, and a fourth 66-bit block is a start block; or
in the four consecutive 66-bit blocks, each of a first 66-bit block and a second 66-bit block is a block of an arbitrary type, a third 66-bit block is a terminate block, and a fourth 66-bit block is a start block.

13. The method as claimed in claim 12, wherein mapping the stream of first blocks to the first transmission container, comprises:
inserting a target idle block into the stream of first blocks or removing the target idle block from the stream of first blocks, to obtain a rate-adapted stream of first blocks, wherein a number of bits of the target idle block is identical to the number of bits of each of the first blocks; and
mapping the rate-adapted stream of first blocks to the first transmission container.

14. The method as claimed in claim 1, wherein mapping the stream of first blocks to the first transmission container, comprises:
mapping the stream of first blocks to a plurality of timeslot blocks;
allocating the plurality of timeslot blocks to a plurality of different transmission instances, and inserting a first overhead block and a second overhead block at preset positions in each of the transmission instances to obtain first transmission containers carried by the plurality of the transmission instances, wherein a preset number of the timeslot blocks present between the first overhead block and the second overhead block.

15. The method as claimed in claim 14, wherein transmitting the first transmission container comprises:
performing block interleaving on the first transmission containers carried by the plurality of transmission instances to obtain first target information comprising the first transmission containers; and
transmitting the first target information.

16. The method as claimed in claim 15, wherein performing block interleaving on the first transmission containers carried by the plurality of transmission instances to obtain first target information comprising the first transmission containers, comprises:
inserting a padding block into the respective first transmission container carried by each of the transmission instances to obtain a respective first candidate transmission container carried by each of the transmission instances, wherein a number of bits of the padding block is identical to the number of bits of each of the first blocks; and
performing block interleaving on each first candidate transmission container carried by a respective one of the plurality of transmission instances to obtain first target information comprising the first transmission containers.

17. A method for service processing, comprising:
extracting a stream of first blocks from received first target information, wherein the stream of first blocks is obtained by transcoding a stream of 66-bit blocks, the stream of 66-bit blocks is obtained by encoding a service stream by means of 64B/66B encoding; and a number of bits of each of the first blocks in the stream of first blocks is greater than 66; and
mapping the stream of first blocks to a second transmission container, and transmitting the second transmission container, wherein the second transmission container contains a plurality of overhead blocks and a plurality of timeslot blocks, a number of bits of each of the overhead blocks and the timeslot blocks is identical to a number of bits of each of the first blocks, overhead information is carried over the overhead blocks, and the first blocks are carried over the timeslot blocks.

18. The method as claimed in claim 17, wherein the plurality of overhead blocks comprise a first overhead block and a second overhead block, and the overhead blocks in the second transmission container are spaced apart by the timeslot blocks of a fixed number.

19. The method as claimed in claim 18, wherein overhead of a first four overhead blocks in a Flexible Ethernet (FlexE) overhead frame is carried over the first overhead block; and overhead of a last four overhead blocks in the FlexE overhead frame is carried over the second overhead block.

20. The method as claimed in claim 19, wherein the first overhead block comprises a first synchronization header, a first block type region, a first overhead region, a second overhead region, a third overhead region, and a fourth overhead region;
the first block type region is indicative of types of the first overhead region, the second overhead region, the third overhead region, and the fourth overhead region; and
overhead of a first overhead block in the FlexE overhead frame is carried in the first overhead region, overhead of a second overhead block in the FlexE overhead frame is carried in the second overhead region, overhead of a third overhead block in the FlexE overhead frame is carried in the third overhead region, and overhead of a fourth overhead block in the FlexE overhead frame is carried in the fourth overhead region.

21. The method as claimed in claim 20, wherein, the first overhead region comprises a first overhead field and a second overhead field; a part of a first byte of the first overhead block in the FlexE overhead frame is carried in the first overhead field; and a last seven bytes of the first overhead block of the FlexE overhead frame is carried by the second overhead field.

22. The method as claimed in claim 19, wherein in response to determining that last four overhead blocks of the FlexE overhead frame are all data blocks, providing a second synchronization header, a fifth overhead region, a sixth overhead region, a seventh overhead region, and an eighth overhead region in the second overhead block; and
overhead of a fifth overhead block in the FlexE overhead frame is carried in the fifth overhead region; overhead of the sixth overhead block in the FlexE overhead frame is carried in the sixth overhead region; overhead of the seventh overhead block in the FlexE overhead frame is carried in the seventh overhead region and overhead of the eighth overhead block in the FlexE overhead frame is carried in the eighth overhead region.

23. The method as claimed in claim 19, wherein in response to determining that a control block is present in last four overhead blocks in the FlexE overhead frame, providing a second synchronization header, a second block type region, a fifth overhead region, a sixth overhead region, a seventh overhead region, and an eighth overhead region in the second overhead block;
wherein the second block type region is indicative of types of the fifth overhead region, the sixth overhead region, the seventh overhead region, and the eighth overhead region; and
overhead of a fifth overhead block in the FlexE overhead frame is carried in the fifth overhead region; overhead of a sixth overhead block in the FlexE overhead frame is carried in the sixth overhead region; overhead of a seventh overhead block in the FlexE overhead frame is carried in the seventh overhead region; and overhead of the eighth overhead block in the FlexE overhead frame is carried in the eighth overhead region.

24. The method according to claim 23, wherein:
the fifth overhead region comprises a third overhead field and a fourth overhead field, a part of a first byte of the fifth overhead block of the FlexE overhead frame is carried by the third overhead field, and last seven bytes of the fifth overhead block of the FlexE overhead frame is carried by the fourth overhead field;
or,
the sixth overhead region comprises a third overhead field and a fourth overhead field, a part of a first byte of the sixth overhead block of the FlexE overhead frame is carried by the third overhead field, and last seven bytes of the sixth overhead block of the FlexE overhead frame is carried by the fourth overhead field;
or,
the seventh overhead region comprises a third overhead field and a fourth overhead field, a part of a first byte of the seventh overhead block of the FlexE overhead frame is carried by the third overhead field, and last seven bytes of the seventh overhead block of the FlexE overhead frame is carried by the fourth overhead field;
or,
the eighth overhead region comprises a third overhead field and a fourth overhead field, a part of a first byte of the eighth overhead block of the FlexE overhead frame is carried by the third overhead field, and last seven bytes of the eighth overhead block of the FlexE overhead frame is carried by the fourth overhead field.

25. The method as claimed in claim 17, wherein mapping the stream of first blocks to the second transmission container, comprises:
inserting a target idle block into the stream of first blocks or removing the target idle block from the stream of first blocks, to obtain a rate-adapted stream of first blocks, wherein a number of bits of the target idle block is identical to the number of bits of each of the first blocks; and
mapping the rate-adapted stream of first blocks to the second transmission container.

26. The method as claimed in claim 25, wherein in response to determining that the target idle block is absent from the stream of first blocks and a plurality of 66-bit idle blocks are present in the stream of 66-bit blocks, removing the target idle block from the stream of first blocks, comprises:
performing inverse-transcoding on the stream of first blocks to obtain the stream of 66-bit blocks;
performing a position adjustment on a plurality of 66-bit idle blocks in the stream of 66-bit blocks to obtain the stream of 66-bit blocks with the plurality of 66-bit idle blocks aggregated; and
transcoding the stream of 66-bit blocks with the plurality of 66-bit idle blocks aggregated to obtain a new stream of first blocks comprising a plurality of target idle blocks; and
removing the plurality of target idle blocks from the new stream of first blocks.

27. The method as claimed in claim 25, wherein each first block is obtained by transcoding four consecutive 66-bit blocks; in response to determining that a last one of the four consecutive 66-bit blocks corresponding to a previous first block is not a control block, or a first of four consecutive 66-bit blocks corresponding to a subsequent first block is not a control block, inserting the target idle block into the stream of first blocks, comprises:
performing inverse-transcoding on the stream of first blocks to obtain the stream of 66-bit blocks;
identifying in the stream of 66-bit blocks, a plurality of target block groups of four consecutive 66-bit blocks that satisfy a preset condition;
in the plurality of target block groups, inserting or removing a 66-bit idle block between a terminate block and a start block, such that the terminate block is positioned in a previous target block group, and the start block is positioned in a subsequent target block group, to acquire a plurality of new target block groups;
transcoding the plurality of new target block groups to obtain a new stream of first blocks;
inserting a target idle block into the new stream of first blocks;
wherein the preset condition comprises one of:
in a target block group, a first 66-bit block is a terminate block, a second 66-bit block is a start block, and each of a third 66-bit block and a fourth 66-bit block is a block of an arbitrary type; or
in a target block group, a first 66-bit block is a terminate block, each of a second 66-bit block and a fourth 66-bit block is a block of an arbitrary type, and a third 66-bit block is a terminate block; or
in a target block group, a first 66-bit block is a terminate block, each of a second 66-bit block and a third 66-bit block is a block of an arbitrary type, and a fourth 66-bit block is a start block; or
in a target block group, each of a first 66-bit block and a fourth 66-bit block is a block of an arbitrary type, a second 66-bit block is a terminate block, and a third 66-bit block is a start block; or
in a target block group, each of a first 66-bit block and a third 66-bit block is a block of an arbitrary type, a second 66-bit block is a terminate block, and a fourth 66-bit block is a start block; or
in a target block group, each of a first 66-bit block and a second 66-bit block is a block of an arbitrary type, a third 66-bit block is a terminate block, and a fourth 66-bit block is a start block.

28. The method as claimed in claim 17, wherein extracting the stream of first blocks from received first target information, comprises:
performing block de-interleaving on the received first target information to obtain a plurality of first transmission containers; and
extracting the stream of first blocks from the plurality of first transmission containers.

29. The method as claimed in claim 17, wherein mapping the stream of first blocks to the second transmission container, comprises:
mapping the stream of first blocks to the plurality of timeslot blocks;
allocating the plurality of timeslot blocks to a plurality of different transmission instances, and inserting a first overhead block and a second overhead block at preset positions in each of the transmission instances to obtain second transmission containers carried by the plurality of the transmission instances, wherein a preset number of the timeslot blocks is present between the first overhead block and the second overhead block.

30. The method as claimed in claim 29, wherein transmitting the second transmission container comprises:
performing block interleaving on the second transmission containers carried by the plurality of transmission instances to obtain second target information comprising the second transmission containers; and
transmitting the second target information.

31. A method for service processing, comprising:
extracting a third transmission container from received third target information, and extracting a stream of first blocks from the third transmission container; wherein the third transmission container comprises overhead blocks and timeslot blocks, a number of bits of each of the overhead blocks and the timeslot blocks is identical to the number of bits of each of the first blocks in the stream of first blocks; overhead information is carried by the overhead blocks, the first blocks are carried by the timeslot blocks, the stream of first blocks is obtained by transcoding a stream of 66-bit blocks, the stream of 66-bit blocks is obtained by encoding a service stream by means of 64B/66B encoding, and the number of bits of each of the first blocks is greater than 66;
performing inverse-transcoding on the stream of first blocks to obtain the stream of 66-bit blocks; and
decoding the stream of 66-bit blocks by means of 64B/66B decoding to obtain the service stream.

32. The method as claimed in claim 31, wherein the overhead blocks comprise a first overhead block and a second overhead block, and the overhead blocks in the third transmission container are spaced apart by the timeslot blocks of a fixed number.

33. The method as claimed in claim 32, wherein overhead of a first four overhead blocks in a Flexible Ethernet (FlexE) overhead frame is carried over the first overhead block; and overhead of a last four overhead blocks in the FlexE overhead frame is carried over the second overhead block.

34. The method as claimed in claim 33, wherein the first overhead block comprises a first synchronization header, a first block type region, a first overhead region, a second overhead region, a third overhead region, and a fourth overhead region;
the first block type region is indicative of types of the first overhead region, the second overhead region, the third overhead region, and the fourth overhead region; and
overhead of a first overhead block in the FlexE overhead frame is carried in the first overhead region, overhead of a second overhead block in the FlexE overhead frame is carried in the second overhead region, overhead of a third overhead block in the FlexE overhead frame is carried in the third overhead region, and overhead of a fourth overhead block in the FlexE overhead frame is carried in the fourth overhead region.

35. The method as claimed in claim 34, wherein, the first overhead region comprises a first overhead field and a second overhead field; a part of a first byte of the first overhead block in the FlexE overhead frame is carried in the first overhead field; and a last seven bytes of the first overhead block of the FlexE overhead frame is carried by the second overhead field.

36. The method as claimed in claim 33, wherein in response to determining that last four overhead blocks of the FlexE overhead frame are all data blocks, providing a second synchronization header, a fifth overhead region, a sixth overhead region, a seventh overhead region, and an eighth overhead region in the second overhead block; and
overhead of a fifth overhead block in the FlexE overhead frame is carried in the fifth overhead region; overhead of the sixth overhead block in the FlexE overhead frame is carried in the sixth overhead region; overhead of the seventh overhead block in the FlexE overhead frame is carried in the seventh overhead region and overhead of the eighth overhead block in the FlexE overhead frame is carried in the eighth overhead region.

37. The method according to claim 33, wherein in response to determining that a control block is present in last four overhead blocks in the FlexE overhead frame, providing a second synchronization header, a second block type region, a fifth overhead region, a sixth overhead region, a seventh overhead region, and an eighth overhead region in the second overhead block;
wherein the second block type region is indicative of types of the fifth overhead region, the sixth overhead region, the seventh overhead region, and the eighth overhead region; overhead of a fifth overhead block in the FlexE overhead frame is carried in the fifth overhead region; and
overhead of a sixth overhead block in the FlexE overhead frame is carried in the sixth overhead region; overhead of a seventh overhead block in the FlexE overhead frame is carried in the seventh overhead region; and overhead of the eighth overhead block in the FlexE overhead frame is carried in the eighth overhead region.

38. The method according to claim 37, wherein:
the fifth overhead region comprises a third overhead field and a fourth overhead field, a part of a first byte of the fifth overhead block of the FlexE overhead frame is carried by the third overhead field, and last seven bytes of the fifth overhead block of the FlexE overhead frame is carried by the fourth overhead field;
or,
the sixth overhead region comprises a third overhead field and a fourth overhead field, a part of a first byte of the sixth overhead block of the FlexE overhead frame is carried by the third overhead field, and last seven bytes of the sixth overhead block of the FlexE overhead frame is carried by the fourth overhead field;
or,
the seventh overhead region comprises a third overhead field and a fourth overhead field, a part of a first byte of the seventh overhead block of the FlexE overhead frame is carried by the third overhead field, and last seven bytes of the seventh overhead block of the FlexE overhead frame is carried by the fourth overhead field;
or,
the eighth overhead region comprises a third overhead field and a fourth overhead field, a part of a first byte of the eighth overhead block of the FlexE overhead frame is carried by the third overhead field, and last seven bytes of the eighth overhead block of the FlexE overhead frame is carried by the fourth overhead field.

39. The method as claimed in claim 31, wherein a plurality of third transmission containers comprising the third transmission container is provided, and extracting the third transmission container from received third target information comprises:
performing block de-interleaving on the received third target information to obtain the plurality of third transmission containers.

40. The method as claimed in claim 39, wherein performing block de-interleaving on the received third target information to obtain the plurality of third transmission containers, comprises:
performing block de-interleaving on the received third target information to obtain a plurality of second candidate transmission containers; and
removing a padding block from the plurality of second candidate transmission containers to obtain the plurality of third transmission containers, wherein a number of bits of the padding block is identical to the number of bits of each of the first blocks.

41. A network device, comprising a memory, a processor and a computer program stored in the memory and executable by the processor which, when executed by the processor, causes the processor to carry out the method as claimed in any one of claims 1 to 40.

42. A computer-readable storage medium storing a computer-executable instruction which, when executed by a processor, causes the processor to carry out the method as claimed in any one of claims 1 to 40.
